# EUROPEAN PATENT SPECIFICATION

(11) **EP 2 979 227 B1**
(45) Date of publication and mention of the grant of the patent: **04.03.2020**
(21) Application number: 14730277.2
(22) Date of filing: 30.04.2014
(51) Int. Cl.: G06K 9/00, G06K 9/32, H04N 21/234, H04N 21/2343, H04N 21/4722, H04N 21/4728, H04N 21/478

(54) **INTERACTIVE VIEWING EXPERIENCES BY DETECTING ON-SCREEN TEXT**
INTERAKTIVE ANSICHTSERFAHRUNGEN DURCH DETEKTION VON TEXT AUF EINEM BILDSCHIRM
EXPÉRIENCES DE VISUALISATION INTERACTIVE PAR DÉTECTION D'UN TEXTE À L'ÉCRAN

(30) Priority: 30.04.2013 US 201361817328 P
(43) Date of publication of application: 03.02.2016
(73) Proprietor: ARRIS Enterprises LLC, Suwanee, GA 30024 (US)
(72) Inventor: OULD DELLAHY, Isselmou, Lake in the Hills, Illinois 60156 (US); MOHAPATRA, Shivajit, Santa Clara, California 95765 (US); BRASKICH, Anthony J., Palatine, Illinois 60067 (US); ISHTIAQ, Faisal, Chicago, Illinois 60640 (US); LI, Renxiang, Lake Zurich, Illinois 60047 (US)
(74) Representative: Openshaw & Co.
(86) International application number: PCT/US2014/036176
(87) International publication number: WO 2014/179466

(56) References cited:
- US-A1- 2005 120 391
- US-A1- 2007 214 488
- US-A1- 2008 097 984
- US-A1- 2011 304 771
- DIMITROVA N ET AL: "MPEG-7 Videotext description scheme for superimposed text in images and video", SIGNAL PROCESSING. IMAGE COMMUNICATION, ELSEVIER SCIENCE PUBLISHERS, AMSTERDAM, NL, vol. 16, no. 1-2, 1 September 2000 (2000-09-01), pages 137-155, XP004216273, ISSN: 0923-5965, DOI: 10.1016/S0923-5965(00)00022-9
- R. Lienhart: "Video OCR: A Survey and Practitioner's Guide" In: "Video Mining", 1 January 2003 (2003-01-01), Springer Science-Business Media, XP055533686, ISBN: 978-1-4419-5383-4 pages 155-183,

## Description

### CROSS-REFERENCES TO RELATED APPLICATIONS

The present disclosure claims priority to U.S. Provisional App. No. 61/817,328 entitled "Interactive Viewing Experiences by Detecting On-Screen Text", filed on April 30, 2013, the content of which is incorporated herein by reference in its entirety for all purposes.

### BACKGROUND

Live and on-demand video content is widely available. Video content, such as television programs, movies, newscasts, and the like, is transmitted from service providers to users who can view the video content using various types of client devices (e.g., televisions, tablet computers, smartphones, desktop/laptop computers, etc.). Such video content can include a combination of images and sounds. The components of the video content can be included in single video data structure; however, each component of the video content can be represented by separate component data types. Accordingly, the video data can include images stored as image data, and sound stored as audio data. A client computing device can then use the video data to render the images and sounds so they can be displayed to a user.

In some scenarios, textual data is included or associated with the video content. For example, program information that describes a particular asset (e.g., title, actors, running time, etc.) can be embedded as textual data into the video signal or video data used to transmit or store the video content. In some scenarios, closed captioning data that includes a transcription of the dialogue or descriptions of sounds in the video content can be also be included in the video data. A client device can decode such closed captioning data and provide it to the user as text in addition to the audiovisual information of the video content. Some video data can include subtitle data that client computing devices can use to generate text that can be superimposed over the visual component of the visual content to provide a translation of the spoken language in the audio component of the video content from one language to another.

In addition to the text defined by the textual data, text can also be embedded or included in the images of the video content. For instance, text in a particular scene can be captured in some of the images in the video. Images of text in signs, text in written documents, and other forms of text can be imaged and included in the visual component of the video content. In other scenarios, the producer of the video content can embed text data into the images of the video content. Such text can be rendered as an overlay to portray certain information in addition to or in parallel to the other information being portrayed in the images or audio of the video content. For example, television programs often overlay text to present supplemental information concurrently with the information in the visual and audio components of the video content (e.g., upcoming episode information, advertisements, etc.). News broadcasts use text embedded in the visual component of the video content to display information about additional news stories or critical updates (e.g., top headlines, story updates, time, temperature, etc.). Financial programs often include a scrolling bar or ticker-tape type display under the image of a newscaster to provide timely stock quotes. Documentaries, and other television shows and movies, label images with identifying information such as the names of people, places, and events. Television stations also superimpose station identification and advertisements for other programs onto the visual component of the video content. Any such text embedded in the image component of the video data is referred to herein as "on-screen text." On-screen text is differentiated from text rendered from textual data included in the video data in that it is not associated with computer readable data and exists only as an image.

A prior art document disclosing video OCR which allows the user to interact with the system via a graphical user interface (GUI) or a remote control is US 2007/214488.

### BRIEF DESCRIPTION OF THE DRAWINGS

FIG. 1 depicts an example display of visual video content containing imaged text and overlay text that can be improved by embodiments of the present disclosure.
FIG. 2 depicts a schematic diagram of a system for providing an interactive graphical user interface based on on-screen text, according to an embodiment of the present disclosure.
FIG. 3A depicts identification of on-screen text, according to an embodiment of the present disclosure.
FIG. 3B depicts of graphical user interface elements based on on-screen text, according to an embodiment of the present disclosure.
FIG. 4A depicts a schematic diagram of a system for providing an interactive graphical user interface based on on-screen text in live video data, according to an embodiment of the present disclosure.
FIG. 4B depicts a schematic diagram of a system for providing an interactive graphical user interface based on on-screen text in on-demand video data, according to an embodiment of the present disclosure.
FIG. 5 depicts a flowchart of a method for generating graphical user interface elements based on on-screen text, according to an embodiment of the present disclosure.
FIG. 6A depicts a schematic diagram of a system for recognizing text in video data, according to an embodiment of the present disclosure.
FIG. 6B depicts a schematic diagram of a system for recognizing text in video data, according to an embodiment of the present disclosure.
FIG. 6C depicts a schematic diagram of a system for recognizing text in video data, according to an embodiment of the present disclosure.
FIG. 7A depicts a schematic diagram of a context generator, according to an embodiment of the present disclosure.
FIG. 7B depicts a schematic diagram of a text area detector and extractor, according to an embodiment of the present disclosure.
FIG. 8 depicts a flowchart of a method for generating graphical user interface definitions based on on-screen text and the context in which the text is recognized, according to an embodiment of the present disclosure.
FIG. 9 depicts a schematic diagram of a framework in which various embodiments of the present disclosure can be implemented.

### DETAILED DESCRIPTION

Described herein are techniques for systems, methods and devices for providing interactive viewing experiences based on the detection of on-screen text in live and on-demand video content. In the following description, for purposes of explanation, numerous examples and specific details are set forth in order to provide a thorough understanding of particular embodiments. Particular embodiments as defined by the claims may include some or all of the features in these examples alone or in combination with other features described below, and may further include modifications and equivalents of the features and concepts described herein.

As used herein, the term "video content" describes audiovisual information, such as the images, sounds, and text generated by a device based on corresponding video signals or video data. Accordingly, the terms "video signal" and "video data" are used herein interchangeably to refer to data that a computing device can decode, or otherwise use, to generate the audiovisual information of the video content. For example, video content can include the images and sounds of a particular television show, movie, music video, newscast, and the like. Video data can therefore include any type of digital file or analog recording in which the video content is stored. A video signal can therefore include digital or analog electronic signals used to transmit or carry the digital files or analog recordings.

In embodiments of the present disclosure, video data or a video signal including video content can be received from a video source by a computing device at a distribution point of a particular video or data service provider. The video source can include one or more television or cable networks that provide video content in various formats. The video content can include visual, audio, and textual video content components. The computing device can include a server computer or a multiprocessor cloud computing environment, such as a headend computer system used to distribute video content to multiple client devices (e.g., set-top-boxes, smartphones, tablet computers, desktop computers, etc.).

In one embodiment, the server can analyze the video data to detect text depicted in the visual video content. Such text can be included in the images of the visual component of the video content. For example, images of text on objects (e.g., signs, buildings, written documents, etc.) can be captured and included in the visual video content. Some video sources generate and embed additional text that can also be included in the visual video content. For example, a news broadcast may include overlays of graphics and/or text that emphasize some aspect of a news story.

Detecting the text in the visual video content can include identifying and locating regions in one or more frames of the visual video content that might contain text. The server can determine the location of the regions and extract the corresponding visual video content from the regions. To increase the utility of the detected text, the server can perform a character recognition operation (e.g., optical character recognition) on the extracted regions of visual video content to generate corresponding textual data that is usable by the server.

Based on the textual data and the corresponding regions of the visual video content, the server can generate a graphical user interface (GUI) that can be displayed in combination with the visual video content. The elements of the GUI can include controls superimposed over one or more regions of the visual video content determined to include corresponding text. The GUI elements can be configured to receive user input to initiate the performance of one or more operations. The particular operations performed can be based on the textual data. In addition, when the operations are performed, the textual data can be used as input.

In one embodiment, the particular operations can also be based on the context in which the textual data was detected and recognized. The context can include information that describes any of the circumstances in which the textual data is recognized. For example, the context can include information about the type of television program, a particular time point (i.e., a particular range of frames) in that program, and/or the location of the text within the frame. Accordingly, if the server detects text that includes the name of a celebrity located somewhere in the middle of the screen near the end of a movie, then the server can generate a GUI element that a user can select to perform a search for movies or television shows associated with that celebrity.

In some embodiments, the context in which text is detected can also be used to improve the accuracy of the character recognition operations. For example, the context can be used to select a custom or limited dictionary of expected or valid words or phrases against which the recognized text can be compared. If the particular combination of characters does not exist in the context-based dictionary, then the computer device can reattempt the character recognition or chose a combination that is close to the original combination of characters and in the dictionary. The features of these and other embodiments of the present disclosure are described in more detail in reference to the examples depicted in the figures.

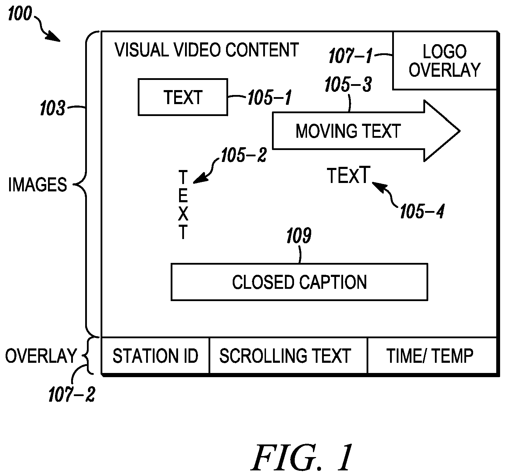

FIG. 1 depicts an example of visual video content 100 as it can be rendered and displayed by a client computing device according to one embodiment. The visual video content 100 may include a still image. Movement and/or variations in time of a video can be simulated by showing multiple frames of still images in sequence according to a particular order. Accordingly, visual video content 100 may include images 103 rendered from corresponding frames of video data. The images 103 can include visual representations of people, places, and objects. Also, the people, places, and objects depicted in the images 103 may include images of text 105 (e.g., characters depicted in an image of a billboard, a sign, or building).

As shown, FIG. 1 is simplified view of text that can be included in the visual video content. In particular, the text 105 is depicted generically and can appear in various sizes, regions, and orientations and with varying quality or resolution within the images 103, as would normally occur when images are captured. For example, text 105-1 can be depicted in one font in a horizontal orientation, while text 105-2 may be depicted in another font in a vertical orientation. Text 105-4, due to the particular camera angle or other variables during the capture of images 103, can include text having letters or characters of different sizes, resolutions, or focus. In the case of moving images 103, in which multiple frames of images are shown in sequence according to a particular order to simulate movement, moving text 105-3 may move from one region of the frame to another as the sequence plays out. For example, as a camera pans across a scene from right to left, the objects captured in the images 103, which can also potentially include text, appear to move in the frame from left to right.

In addition to the text 105 and other objects shown in the images 103, the visual video content 100 may also include text that is overlaid or superimposed on top of the images 103. For example, overlay text 107 may be generated by the producer of the visual video content 100, or a service provider, and embedded into the visual data from which visual video content 100 is rendered. Also, images 103 can include a logo or station identifier including text 107-1 in the upper right-hand corner of images 103. Accordingly, each frame in a particular sequence of ordered frames in a particular video asset or on a particular channel can include the same logo overlay 107-1 in the same location. Similarly, the overlay 107-2 can include text in specific locations across the bottom of the images 103. In the example shown, the overlay 107-2 can include station identification text, scrolling text, and time/temperature text disposed at the bottom video content. In such scenarios, while the location of the overlay 107-2 may be the same in each frame (e.g., at the bottom), the information depicted in the text of the overlay 107-2 may change from frame to frame. For example, information depicted by the scrolling text and time/temperature in their respective positions in the overlay 107-2 will vary over time. In terms of an ordered sequence of frames, the characters of text in the overlay 107-2 will vary based on the location of the frame within the particular sequence.

In addition to the text 105 and overlays 107, the visual video content 100 may also include text rendered from computer readable textual data, such as closed captioning text 109 or electronic program guide information (not shown). Text rendered separately based on computer readable textual data typically need not be included in the visual data component of the video data, however, in some embodiments, it is possible to encode the visual data, audio data, and textual data into a single video data file or video signal.

Embodiments of the present disclosure can analyze the visual video content to locate and extract what is often referred to as "on-screen text" included in the visual data. The on-screen text can then be recognized by a character recognition operation on a character-by-character basis. The character data can then be used to generate textual data corresponding to the actual meaning of the on-screen text. In such embodiments of the present disclosure, any type of language or writing system can be used.

A writing system is typically characterized as an organized, regular, or standardized method of information storage and transfer for the communication of messages in a language by visually encoding and decoding, also referred to as writing and reading, suing a set of signs or symbols, both known generally as characters. The characters often include letters and numbers that can be presented on various media, such as paper or an electronic display.

Writing systems can be classified in broad categories, such as alphabets, syllabaries, or logographies. Some systems can include attributes of more than one category. A writing system in the alphabetic category can include a standard set of letters (e.g., basic written characters, symbols or graphemes) of consonants and vowels that encode based on the general principle that the letters or letter pair/groups represent phonemes (e.g., basic significant sounds) of the spoken language. A syllabary typically correlates a symbol to a syllable. In a logography, each character represents a word, morpheme or semantic unit. A system's category can often be determined just by identifying the number of symbols used within the system. Alphabets typically use a set of 20-to-35 symbols to fully express a language, whereas syllabaries can have 80-to-100, and logographies can have several hundred symbols. For the sake of simplicity and clarity the term "character" is used herein to refer to the individual signs and symbols of any writing system. For example, "character" can refer to a letter in the English language as well as a logogram used in written Chinese and other Eastern languages.

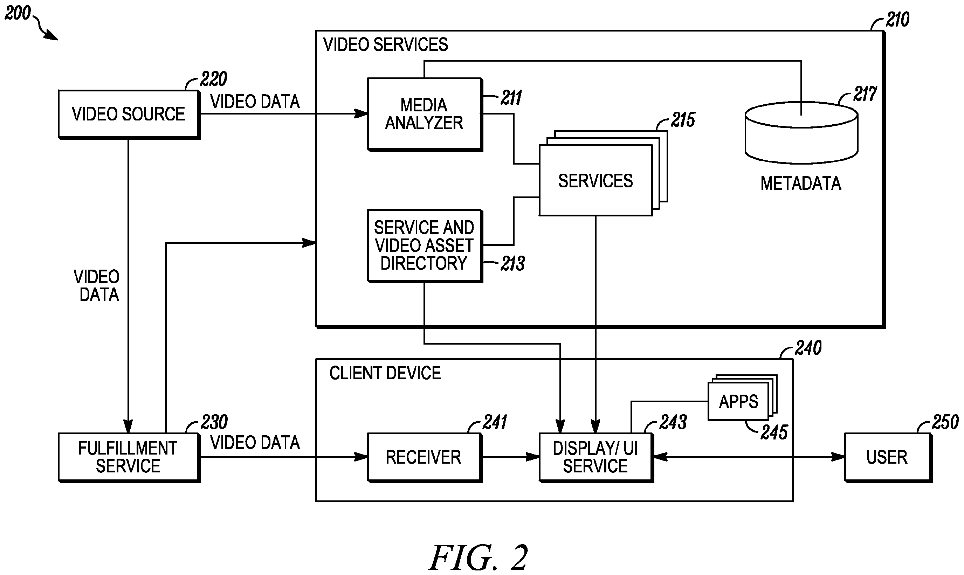

Embodiments of the present disclosure can detect and recognize on-screen text regardless of the type of writing system used. FIG. 2 is a high level block diagram of a system 200 for detecting and extracting on-screen data, according to various embodiments of the present disclosure. As shown the system 200 includes a video source 220, video services 210 and a client device 240. The components of system 200 can be implemented as combinations of hardware and software. Accordingly, system 200 can be implemented using one or more processors executing computer readable code on in one or more computer systems.

The video source 220 of system 200 can include any source of video content. For example, video source 220 can include a feed from a television station, a cable network, a website, or other content provider. In some embodiments, the video source 220 can be provided via a satellite communication feed and received by a local distribution point, such as a server computer system or other receiver at a cable service provider's headend facility.

The video source 220 can provide video data to the video services 210. As shown, the video services 210 can include a media analyzer 211, a service and video asset directory 213, and various component services 215. In some embodiments, the video services 210 can also include a metadata data store 217 in which information describing or regarding the programming in the video data can be stored.

The media analyzer 211 can receive the video data and analyze it to generate various metadata that can be stored in the metadata data store 217. Part of the analysis of the incoming video data can be to determine programming data. The programming data can include time indications that signify the beginning and end of independent video assets in the video data. Each video asset can be associated with a particular identifier and the corresponding time indications. For example, media analyzer 211 can determine programming data that includes start and end times of specific television program associated with a particular identifier (e.g., the name of the television show). The associated time indications and identifiers can be stored in the metadata data store 217. The media analyzer 211 can also provide the time indications to the services 215 and the service and video asset directory 213.

The services 215 can include functionality implemented in one or more processors for processing the visual, audio, and textual data in the received video data. In one embodiment, the services 215 can include optical character recognition (OCR) functionality for detecting and recognizing on-screen text in the visual data. In other embodiments, the services 215 can include functionality for generating graphical user interface (GUI) definitions based on the detected on-screen text and the corresponding textual data. In related embodiments, the services 215 can include functionality for associating particular operations to be performed in response to user input received through the elements or controls of a GUI rendered based on the GUI definition. For example, a particular GUI definition can specify that the region around particular on-screen text will trigger the operation of a particular service 215 that uses the on-screen text as input. The use of on-screen text for generating enhanced GUI functionality is discussed herein in more detail below.

The service and video asset directory 213 can generate directory data, and/or a corresponding directory user interface, for cataloging the particular services 215 and video assets that are available from the video services 210. For example, the service and video asset directory 213 can include a listing of the services 215 by functionality or name. Similarly, the service and video asset directory 213 can include a listing of television programs, movies, video clips, and other video content available from the video source 220.

In some embodiments, the video services 210, and the functionality therein, can be used in combination with a fulfillment service 230. As shown, the fulfillment service 230 can receive the video data 220 directly from the video source 220. In such embodiments, the fulfillment service 230 can provide the video data to the client device 240 directly. In some embodiments, the fulfillment service 230 can also transcode the video data from one format to another before transmitting the video data to the client device 240. For example, the fulfillment service 230 can translate the video data from its native format to one or more formats usable by the client device 240. In another embodiment, the fulfillment service 230 can also record and/or store the video data in one or more formats for subsequent retrieval by the client device 240 (e.g., in response to video-on-demand requests).

The client device 240 can receive the video data from the fulfillment service 230 using a receiver 241. Receiver 241 can decode the video data and render the corresponding visual video content on a display device/UI device 243 (e.g., a touchscreen or computer monitor). While the display/UI device 243 is displaying the visual video content, it can also access and render information corresponding to the visual video content from the service and video asset directory 213. For example, in response to user input, the user/UI device 243 can display programming information related to the visual video content, such as a name, rating, duration, summary, description, and the like. Similarly, the display/user device 243 can display information regarding the available video assets to which the video services 210 have access. In one example, the display/UI device 243 can receive a listing of all available channels and their corresponding lineups and present the information to a user 250 as an electronic program guide.

In addition to the information regarding a particular program and the lineup information for some number of channels, the display/UI device 243 can receive and display information generated by the various services 215. For instance, in response to user input, a particular service 215 may perform various operations that generate resulting data. The resulting data can then be sent from the service 215 to the display/user device 243. The resulting data can then be used by the display/UI device 243 and/or sent to one or more of the applications 245 executed in the client device 240. The applications 245 can be executed on one or more processors of the client device 240 to provide functionality to further customize or enhance the user experience while user 250 is viewing the video content corresponding to the video data.

While system 200 shown in FIG. 2 is illustrated as being in a client-server configuration in which video services 210 are implemented in one or more processors in one or more computing devices (e.g., server computers or a cloud computing environment) and the functionality of client device 240 is executed on a processor of a client computing device (e.g., a laptop, desktop, or tablet computer, smart phone, set-top-box (STB), etc.), other configurations are possible. For example, in some embodiments, the functionality described in reference to video services 210 and the client device 240 can be performed by either the video services 210 or the client device 240. Accordingly, one or more of the media analyzer 211, services 215, metadata data store 217, or the service and video asset directory 213 can be executed on the client device 240. Similarly, the functionality of the applications 245 can be implemented in a corresponding application on a server computer.

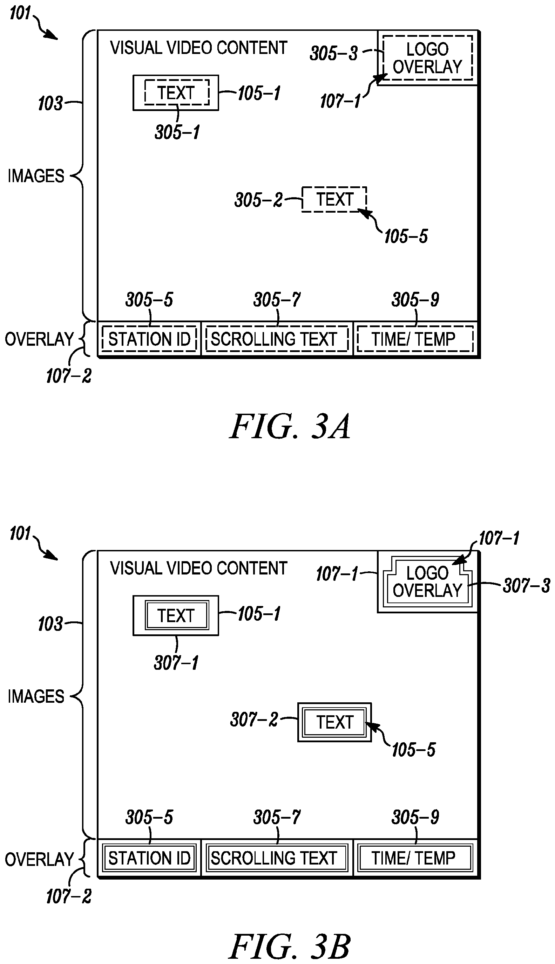

FIGS. 3A and 3B illustrate particular example screens of visual video content 101 during the detection and recognition of on-screen text and a corresponding GUI based the on-screen text, according to an embodiment of the present disclosure. In FIG. 3A, visual video content 101 generated from a particular frame of video data includes images and overlays. The images 103 include the text 105 and the overlays 107 also include text. In the particular example shown, video services 210 can analyze the images 103 and overlays 107 to detect regions 305 that potentially include text. In the example shown, when video services 210 detects a region that potentially contains text, it can extract the corresponding portion of the images 103 or overlay 107 as indicated in FIG. 3A by regions 305 bounded by dotted lines.

In such embodiments, detecting the regions 305 can include determining the coordinates and area of each of the regions 305 within the frame of the visual video content 101. For example, the coordinates of a particular region 305 can be XY coordinates in units of pixels or other dimensional units relative to one or more corners, or other fixed reference point, of the frame. The area of the regions 305 can be specified by a length and a width in pixels or other dimensional unit. Thus, any region 305 can be specified by a combination of coordinates and area. While the example regions 305 are depicted as being rectangular regions, one of ordinary skill in the art will recognize that any shape boundary can be used to define the regions 305. Similarly, while XY coordinates are described as a particular example coordinate system, it is possible to use any other coordinate system to specify a particular location within the frame of the visual video content 101.

The video services 210 can analyze the extracted portions of the visual video content 101 in detected regions 305 and perform a character recognition operation to generate textual data corresponding to the text. The character recognition operation can include an optical character recognition (OCR) operation. Such character recognition operations can include analysis of the portion of the visual video content in the region 305 on a character-by-character basis. For example, character recognition operations can generate individual letters and spaces and/or their corresponding computer readable character data (e.g., ASCII code or binary equivalent). In some embodiments, the recognition of the characters and the generation of the corresponding textual data can be enhanced by comparing the combinations of the recognized characters against a dictionary of possible or expected combinations of letters and words. Use of such dictionaries can improve the accuracy of the character recognition by eliminating less probable combinations of characters and by limiting the possible resulting generated words, sentences, or phrases.

In some embodiments, the particular dictionary used can also be determined by the context in which the text is being recognized. For example, if the text 105 exists in visual video content 101 that is determined to be part of a sports talk show, then the character recognition can be improved by referencing a dictionary specific to the context of sports vocabulary. Context-based improved character recognition is described in more detail below.

In embodiments, the textual data corresponding to the text 105 can be associated with the corresponding region 305. The association of the textual data and the region 305 can include a unique identifier, the coordinates, and/or the area. In related embodiments, the associated textual data and region 305 may also include an indication of the frame or frames in which the text 105 and/or region 305 exist in the video data.

FIG. 3B illustrates an example GUI rendered based on a corresponding GUI definition generated in response to the textual data corresponding to the detected text 105 for each region 305. In the particular example shown, each region 305 can be highlighted or boxed by a GUI element or control 307 (e.g., a visual representation of a button or otherwise selectable text). Each GUI element 307 can be associated with the region 305 and/or the textual data corresponding to the text 105. In addition, each GUI element 307 can be associated with a particular operation. For example, one or more particular operations can be performed when the corresponding GUI element 307 is selected. In some embodiments, the particular operations performed use the textual data corresponding to the text 105 contained in the corresponding region 305. For example, when a user 250 clicks on, or otherwise selects, GUI element 307-1, embodiments of the present disclosure can execute one or more Internet searches that include search terms based on or including the textual data corresponding to the text 105-1.

The combination of all of the GUI elements 307 can be combined into a GUI definition associated with the particular frames with which the regions 305 and textual data are associated. The GUI definition can include specifications for generating a corresponding GUI that includes GUI elements 307, one or more corresponding operations to perform, textual data for the corresponding text 105, and the location and size of the regions 305 for one or more frames in a particular video asset.

In one embodiment, the video services 210 can generate the regions 305 and the corresponding textual data for text 105 contained in the regions 305. Based on information regarding the regions 305 and the textual data, the display/UI device 243 and/or one or more of the applications 245 in the client device 240 can generate a GUI definition. In other embodiments, one or more of the services 215 in the video services 210 can generate the GUI definition. In either such embodiments, display/UI device 243 can render a GUI based on a GUI definition associated with a particular frame. The appropriate GUI can then be superimposed over the associated or corresponding frames of a particular video asset to present the user 250 with an interactive experience while viewing the video asset. Using various user input devices, user 250 can select any of the resulting GUI elements 307 to invoke the various predetermined or dynamically determined operations associated with the regions 305 and/or text 105.

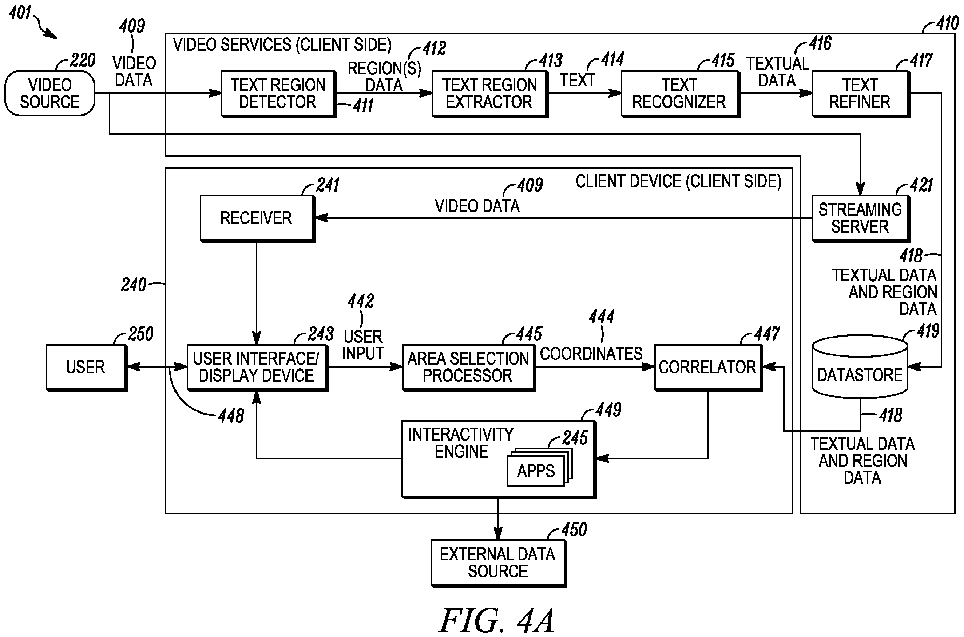

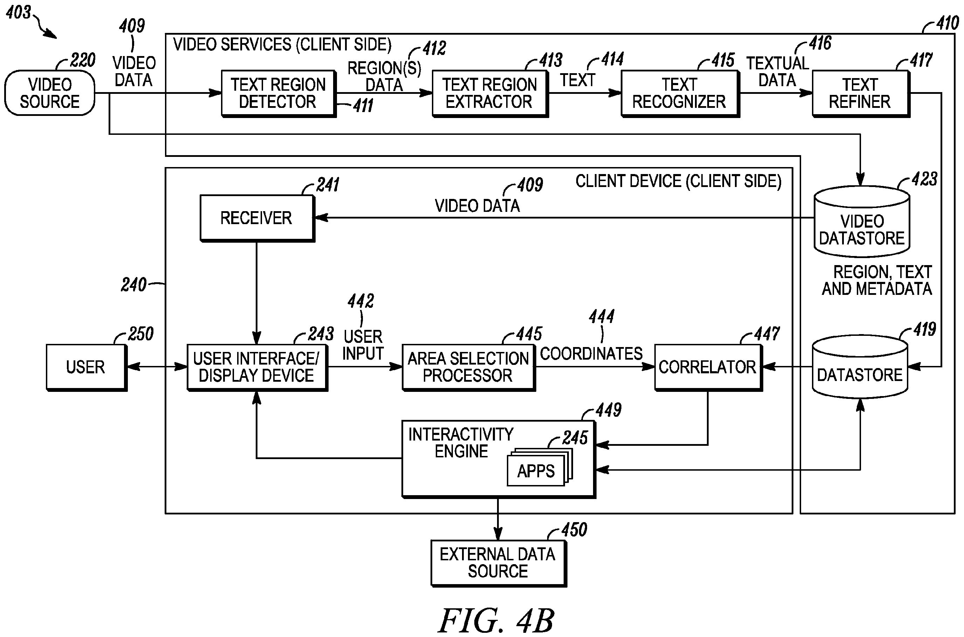

FIGS. 4A and 4B illustrate data flows 401 and 403 for providing interactive user interfaces based on detected on-screen text in live and video on-demand (VOD) viewing scenarios, according to various embodiments of the present disclosure.

In FIG. 4A the data flow 401 can begin when video services 410 (e.g., functionality on the server side) receives video data 409 from a video source 220. In some embodiments, the video data 409 can include visual data, audio data, and or textual data. In embodiments, the video data 409 can include multiple frames of each type of data. For example, video data 409 can include visual data corresponding individual still images. When the frames are rendered in sequence according to a particular order over some period of time, the resulting effect is a simulation of motion. Because the rate at which the individual frames are rendered in sequence can vary, the speed of the moving picture can be changed. For example, when the individual frames are rendered at a regular speed corresponding to the amount of time that elapsed between the capture of each of the individual frames, the moving picture appears to move in a realistic manner. Similarly, if the rate at which the individual frames are rendered is increased or decreased, then the appearance of the motion in the moving picture also increases or decreases (e.g., in a fast-forward or rewind).

Video services 410 can include functionality for processing the video data 409. For example, the video services 410 can include functionality of a text region detector 411, a text region extractor 413, a text recognizer 415, and a text refiner 417. The video services 410 can also include a streaming server 421, and a region, text, and metadata data store 419. The functionality of any of the subcomponents of the video services 410 depicted in FIG. 4A can be performed by one or more of the services 215 or other subcomponents of the video services 210 depicted in FIG. 2.

When the video services 410 receive video data 409, the text region detector 411 can analyze it to determine one or more regions in the visual data that potentially contain on-screen text. As described herein, each region can be defined by corresponding region data 412. The region data 412 that the text region detector 411 generates can include coordinates within particular frames and an area (e.g., length and width). The region data 412 can be passed to text region extractor 413 that extracts the corresponding portion of the visual data that potentially contains on-screen text 414. The portion of the visual data containing the on-screen text 414 is passed on to a text recognizer 415. The text recognizer 415 performs one or more types of character recognition on the on-screen text 414 to generate corresponding textual data 416. Text refiner 417 can receive the textual data 416 and compare it against one or more listings of expected textual data to improve the accuracy of the recognized text. The refined textual data and it associated region data 412 can be associated and stored as associated textual and region data 418 in the data store 419.

Meanwhile, the video data 409 can be received by the streaming server 421 in parallel to the operations described above. The streaming server 421 may apply various processing to the video data 409 to reformat it into a format usable by the client device 240. The streaming server 421 can also apply a delay to the transmission of the video data 409 according to the time it takes for the other components of the video services 410 to process the incoming video data so that video data is available at the same time as the associated textual and region data 418. Such delays allow for the appropriate synchronization between the video data 409 and resulting character recognition based GUI when displayed to user 250.

For instance, the client device 240 receives video data 409, in whichever format can be processed by receiver 241, the correlator 447 can access the associated textual and region data 418 in the data store 419. The associated textual and region data 418 can be forwarded to the interactivity engine 449, which can include functionality provided by one or more applications 245. In one embodiment, one or more of the applications 245 can analyze the textual and region data 418 of a particular frame or set of frames to generate a corresponding GUI definition. The user interface/display device 243 can then use the GUI definition and the video data 409 received through the receiver 241 to generate and interactive GUI 448 to display to the user. As described herein, the interactive GUI 448 can include various GUI elements superimposed over locations in the visual content corresponding to the regions containing text.

Through the GUI 448, the user interface/display device 243 can receive user input 242 from the user 250. The user input 242 can be entered using various selection tools such as a mouse, remote control, pointer, hand gestures, and the like. The user input 242 can include coordinates within a particular frame. The area selection processor 445 can translate the user input 242 into a particular coordinate system corresponding to the coordinate system used in the region data. Using the resulting coordinates 444 received by the correlator 447, the correlator 447 accesses the data store 419 or the GUI definition generated by the interactivity engine 449 to determine if the coordinates 444 of the user input 442 correspond to a region 305 containing text or a particular GUI element. If the correlator 447 determines that the user input 442 includes coordinates 444 that correspond to a region 305 containing text or a GUI element, then it can forward the coordinates and/or the region identifier and the associated textual data to the interactivity engine 449. Based on the GUI definition, the region identifier, and the associated textual data, the interactivity engine 449 can perform one or more predetermined or dynamically determined operations. For example, interactivity engine 449 can execute one or more of the applications 245 using the textual data as input. In some embodiments, the applications 245 can include functionality for generating a query for retrieving information from an external data source 450. In such embodiments, the query can include the textual data and be formatted according to specific requirements of the particular external data source 450.

The interactivity engine 449 can return results from performing the operation associated with a particular user input 442 and GUI definition. In some embodiments, the results of an operation can be returned in the form of an additional GUI that represents the results. The additional GUI can include additional GUI elements that a user can activate to invoke additional functionality to further explore or interact with the results of the operation.

Figure 4B illustrates a data flow 403 for providing interactive user interfaces based on detected on-screen text in an on-demand (VOD) viewing environment in which the video data 409 is not streamed directly to the receiver 241 or the client device 240, according to various embodiments of the present disclosure. The functionality of the video services 410 and its components modules 411, 413, 415, and 417 can be the same as the functionality described above in reference to the similarly numbered components of the video services 410 in FIG. 4A. Similarly, the functionality of the component modules 241, 243, 445, 447, 449 of the client device 240 are analogous to the functionality described in reference to the similarly numbered components depicted in data flow 401 of FIG. 4A.

The main difference between the data flows 401 and 403 is that the video data 409 is not streamed directly to the receiver 241 or the client device 240. Rather, the video data 409 is stored in the video data store 423 until requested by the client device 240. Accordingly, the video data store 423 can store the video data 409 in various formats according to the requirements of the various types of client devices 240 that can access to the video store 423. For example, the video data 409 can be reformatted or compressed into lower resolution versions suitable for transmitting over wireless communication media and protocols and viewable on small portable client computing devices (e.g., smart phones).

The video data 409 can include multiple video assets (e.g., television programs, movies, video clips, commercials, advertisements, etc.). To identify and organize the video assets in video data, or a video signal, each video asset can be associated with a unique identifier, and can be stored in the video data store 423 along with its associated identifiers. In addition, each video asset or its corresponding identifier can be stored with corresponding metadata. The metadata can describe the characteristics of each video asset, such as the title, duration, availability period, a description of the content, a category of the content, and the like.

The same metadata, or some portion thereof, associated with the video assets in the video data store 423 can also be associated with the textual and region data 418 in the data store 419. Accordingly, the interactivity engine 449 and/or one of the applications 245 can access and use the metadata along with the textual and region data 418 to generate a corresponding GUI definition. The metadata may be used to determine a particular context in which a particular word in the textual data 416 was recognized. That context can then be used to inform the generation of the GUI definition. For example, if the metadata indicates that the textual data was recognized in and the associated with a frame of an advertisement for a particular automobile company, then the resulting GUI definition can include specifications that when the GUI elements corresponding to the textual data is selected, a web browser (e.g. one of the applications 245) should be executed to open a website identified by a web address based on the textual data.

When the client device 240 retrieves a particular video asset in the video data store 423, it can also retrieve the corresponding region data, textual data, and metadata. In some embodiments, the video asset and the corresponding region data, textual data, and metadata can all be retrieved according to a common identifier. Accordingly, as client device 240 renders the video content based on the video data 409, the interactivity engine 449 can generate the GUI definition that the user interface/display device 243 can use to generate a corresponding GUI through which the user 250 can interact with the video asset.

In one particular embodiment, the interactivity engine 449 or one of the applications 245 can use textual data to run a search on popular external Internet or social network sources (Twitter™, Facebook™, Google™, etc.) to find related content. The related content can then be used to augment the primary video content in real-time. Using filters based on relevance, the interactivity engine 449 can identify and summarize the related content retrieved from such sources. The related content can be presented as supplemental information in addition to the video content. In some embodiments, the supplemental information can be included in one or more of the interactive GUIs described herein. The interactive GUI allows users to further investigate topics of interest by following links.

In yet another embodiment, a client device 240 can observe and capture the user interactions with the GUI or other user interface and relay information about the user interactions to video services 210. Such interactions can be collected from multiple users to create an interactivity heat map that would present valuable context. For example, the interactivity heat map may indicate which portions of the video data generate the most interaction. This context information could then be exploited for additional customization of video content delivered to specific users or groups of users (e.g., targeted advertising etc.).

In another embodiment, groups/circles of friends currently engaged with the same video content could be presented with enhanced views of what others are engaged in and even promote participation through real-time telestration.

In an embodiment, the interactivity engine 449, or one of the component applications 245, can generate a GUI definition based on topics that are trending in certain circles of users or on a social network or on the Internet in general. In such embodiments, the interactivity engine 449 can analyze one or more video assets to detect and recognize on-screen text displayed within the visual video content. The interactivity engine 449 can then obtain a collection of trending topics from an external data source 450 or social network. The trending topics can be displayed to the user in response to user input indicating that the user would like to view trending topic (e.g., clicking a trending topics button in a GUI superimposed over video content). The user can then select one of the trending topics. The server can determine portions of one or more video assets that are related to the selected trending topic by searching the data store 419 or the current video data for textual data that matches the trending topic. The interactivity engine 449 can then access the specific points in a video asset based on the region data associated with the matched textual data (e.g., jump to the first frame in the video data that has a region that include the textual data).

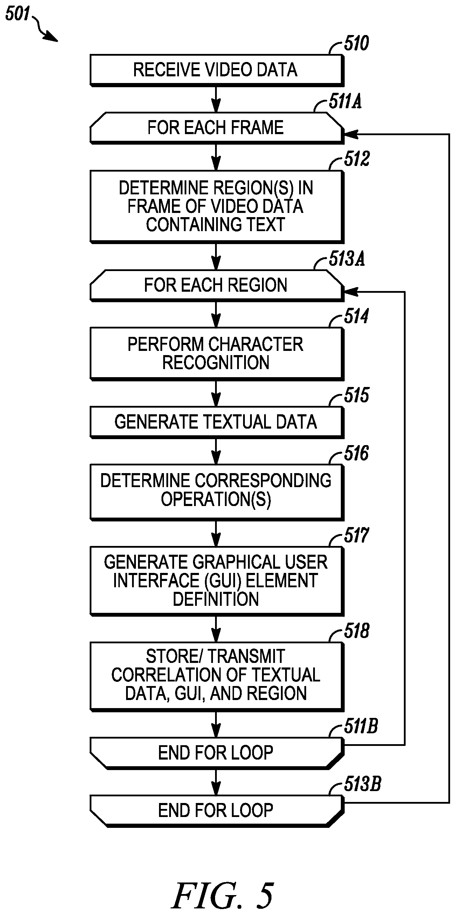

FIG. 5 depicts a flowchart of a method 501 for generating an interactive GUI based on on-screen text included in visual video content, according to embodiments of the present disclosure. While the following description of method 501 is described from the perspective of a headend server computer, some or all of the actions of the method 501 can be performed by a corresponding client computing device or another computing device. In such embodiments, the actions performed in method 501 can be distributed amongst one or more computing devices that are in communication with one another. Similarly, the actions of the method can be implemented in hardware, firmware, software, or combination thereof. As such, the actions can be implemented as computer executable instructions executed on one or more computer processors. For example, computer executable instructions can be executed on a server computer to implement the functionality of video services 410 or 210. However, for the sake of clarity, the actions in method 501 are described as being performed by a server computer.

At block 510, the server can receive video data from a video source 220. As described herein, the video data can include one or more video assets. Each video asset can include multiple frames of visual video content. In one embodiment, for each frame in the video data, the server can execute the loop beginning at 511A.

At block 512, the server can determine regions in the frame of video data that contain or potentially contain text. In such embodiments, determining the regions in the frame that might contain text can include determining the coordinates and an area that define the region within the frame. The server can generate corresponding region data that can include a region identifier, the coordinates, and the area for particular region. In one embodiment, the region data can also include a portion of the visual video content contained in the region.

For each of the regions in the frame, the server can execute the loop beginning at 513A.

In the loop, in block 514, the server can perform one or more character recognition operations on the visual video content within the region. In one embodiment, the server can perform the character recognition operation on the region data that includes the portions of the visual video content.

At block 515, the server can generate textual data based on the character recognition operation. In some embodiments, generating textual data can include referencing metadata associated with the video data to determine a context in which the text is appearing. Based on the context, the server can determine one or more specialized vocabularies or dictionaries against which the results of the character recognition operation can be compared to improve the accuracy of the generated textual data.

In one embodiment, the server can determine one or more corresponding operations to execute based on the region data, the metadata, the context, and/or the textual data, at block 516. For example, for textual data that includes the name of a professional athlete determined from a video asset associated with metadata that describes a news report, the server can determine that the corresponding operation should include launching a web browser and initiating a search using one or more search engines regarding news about that athlete.

At block 517, the server can generate a GUI element definition that can be used to generate a corresponding GUI element in an interactive user interface while the video asset is displayed. At block 518, the server can save the associated textual data, GUI definition, and region data to a data store that is accessible by one or more client computing devices and referenced while the client computing device is receiving the corresponding video data. Alternatively, the server can transmit the associated textual data, GUI definition, and region data to one or more other computing devices to generate a corresponding GUI while consuming the corresponding frame. In such embodiments, the associated data can be sent in real or near real time as the video data is being live broadcast to the client computing device.

At block 511B the server can repeat the actions in blocks 514 through 518 for all the regions in a particular frame. Similarly for the frames in the video data or video asset, server can repeat actions in block 512 and the actions in the loop between blocks 513A and 513B.

Various aspects of the present disclosure can be improved by improving the accuracy with which on-screen text is detected. Conventional character recognition techniques for determining on-screen text from video data have several drawbacks. For example, the accuracy of character recognition is limited by the quality of the visual video content in the frames. The accuracy of conventional character recognition of text in visual video content also depends heavily on the particular system's ability to define the bounding box confining the regions of pixels that contain text, the contrast between the text pixels and the background pixels within the regions, and noise that may cause a text pixel to be misclassified as a background pixel. Embodiments of the present disclosure overcome such image quality drawbacks of the quality of the visual video content by leveraging the temporal redundancy in the video data (i.e., multiple frames of the same or similar visual video content containing the same text) to further increase the accuracy of the character recognition operations. In addition, embodiments of the present disclosure include techniques for determining and using contextual information to improve the detection and recognition of on-screen text.

### Context-Based Character Recognition

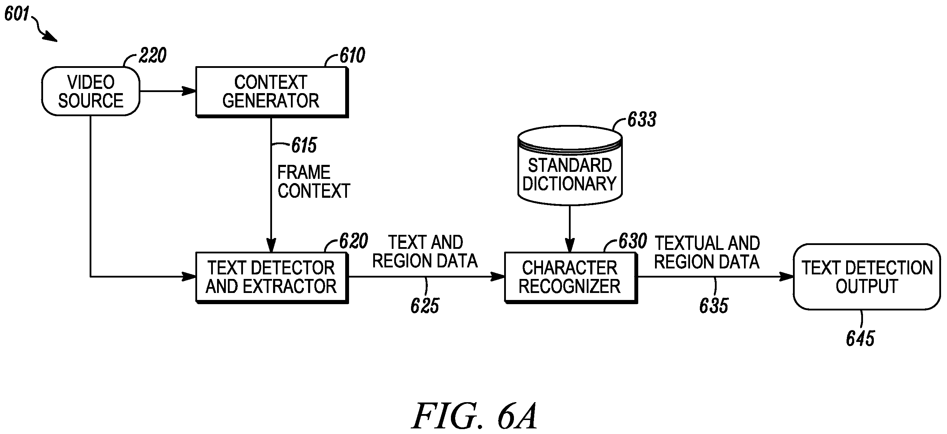

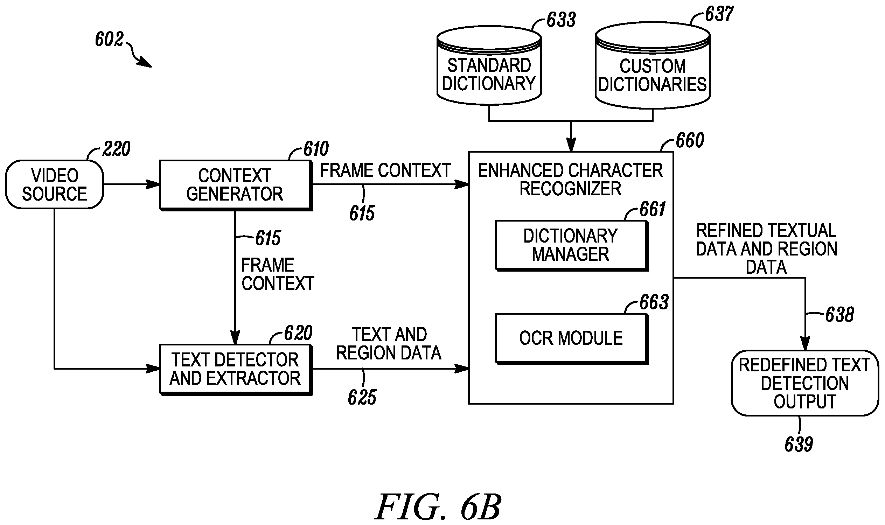

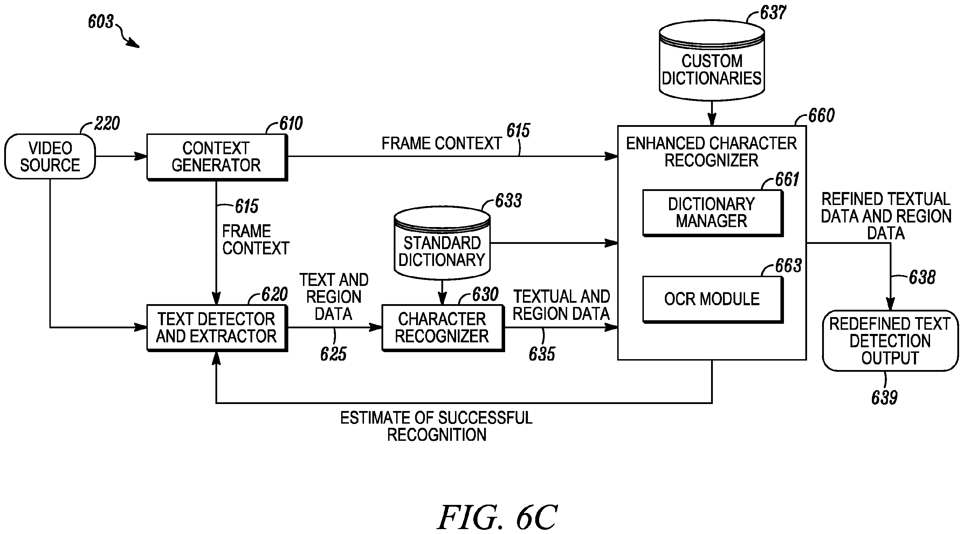

FIGS. 6A, 6B, and 6C illustrate systems 601, 602, and 603 for contextual character recognition, according to embodiments of the present disclosure. Systems 601, 602, and 603 can be used independently and in combination with other embodiments of the present disclosure. In embodiments of the present disclosure, the various components of systems 601, 602, and 603 can be implemented in one or more of the services 215 in the video services 210 in the server of system 200.

Figure 6A depicts a particular example system 601 for generating textual data using contextual information about the individual frames in the video data received from the video source 220. In one embodiment, the context generator 610 receives video data from the video source 220. The context generator 610 can be a process executed on one or more processors that analyzes the video data to generate the frame context 615. The frame context 615 can include descriptive information about a particular frame in relation to its location within the sequence of frames in the video data. In some embodiments, the frame context data may include descriptive metadata about the video data. For example, the metadata may include identification of segments within the video data and identification of camera shots within the video data. Accordingly the frame context data 615 can include an indication of the segment or shot in which the particular frame is located.

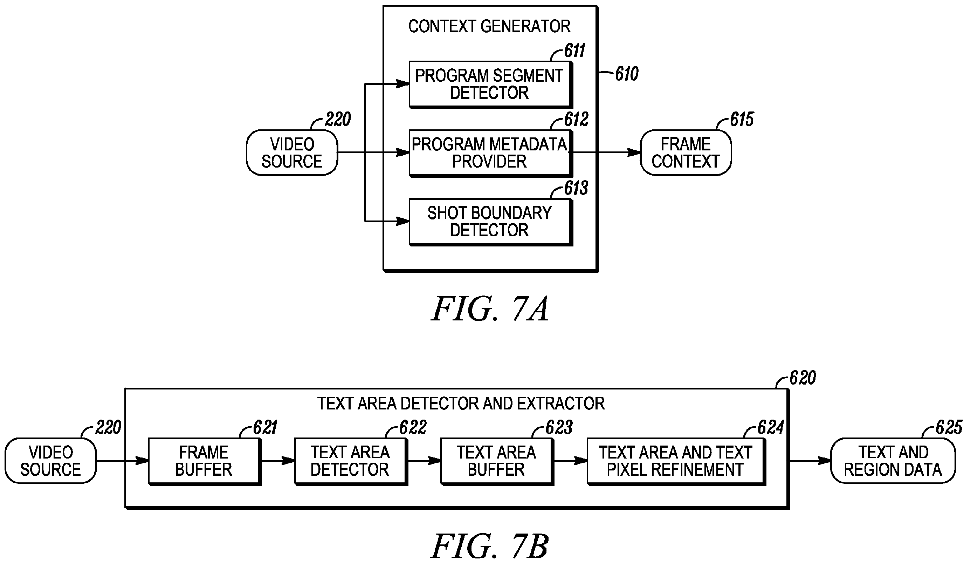

To further illustrate the functionality of the context generator 610, we can turn to FIG. 7A. As shown in FIG. 7A, the context generator 610 can include various component modules, such as program metadata provider 612, the program segment detector 611, and a shot boundary detector 613. In some embodiments, the context generator 610 may include any subset or combination of these component modules, and may include any other modules or elements that determine the context of a frame in video data.

The program metadata provider 612 can determine program metadata related to the video data received from the video source 220. Such program metadata can include descriptive information about the video. Descriptive information can include a title, subtitle, description, summary, duration, indication of genre, descriptive keyword or tags, and the like. For example, the video data may include a program broadcast from a particular television network. As described herein, such programming can include newscasts, sporting events, movies, game shows, etc. In other embodiments, video data may be received from other sources other than traditional television network or cable networks. For example, video source 220 can include websites that stream video data from one or more other server computers or peer client computers.

In one embodiment, the program metadata provider 612 may receive and store program metadata from an external source, such as a database of electronic program guide information. When the program metadata provider 612 identifies a channel or station identifier representing the identity of the source of the video and is configured with the current date and time, it can access the electronic program guide information to determine metadata about the video data. In other embodiments, when the video data is obtained from a website or similar source, the website may provide the metadata about the video. In such embodiments, the program metadata provider 612 can access the metadata of on website or embedded in the video data. The program metadata provider 612 can output the metadata regarding the video data.

In another embodiment, the program metadata provider 612 may not have access to external metadata about the video data. In such embodiments, the program metadata provider 612 may analyze the video data, including but not limited to the visual data, the audio data, and embedded textual data, to determine metadata about the video. For example, the program metadata provider 612 may detect the genre, such as if the programming is a newscast or a sporting event. It may additionally detect the specific program and determine the title of the program, for example.

In some embodiments, the context generator 610 may also include a program segment detector 611. The program segment detector 611 can analyze the video data to detect segments within the video data. Analyzing the video data can include analyzing one or more components of the video data. For example, analyzing the video data can include analyzing the visual data, the audio data, and/or the textual data. As used herein, a segment identifies a continuous portion of the video data. The portion of the video data can be specified by a start time and an end time or, similarly, a start frame and an end frame. Accordingly, the segment may be defined as a subgroup of frames in a particular video asset and the associated or synchronized audio data and textual data. For example, a television sitcom may be segmented into portions of the show separated by various commercial breaks. Segmentation of the video data may include identifying breaks in continuity of the visual content (e.g., a change in scene) and/or the audio content (e.g., identification of songs, sounds, or specific dialog). The program segment detector 611 can then output corresponding segment data that identifies or describes the segments in the video data.

In one embodiment the context generator 610 may also include a shot boundary detector 613. The shot boundary detector 613 includes functionality for identifying sequence of frames in the video data that belong to a single shot. As used herein, a "shot" refers to a group of contiguous frames that are captured using the same camera. For example, a shot may include a group of frames captured while the camera is panning, tilting, rotating, or zooming. In general, adjacent frames within a particular shot exhibit strong similarity. Typical video data includes frequent shot changes. By detecting boundaries between the shots, the shot boundary detector 613 can identify different shots within the video data. Shot boundaries can include either hard cuts that include abrupt changes between adjacent frames (e.g., switching directly to another camera angle or another scene altogether) and/or soft transitions in which images from adjacent frames overlap one another to provide a cross fade, wipe, fade-outs, or fade-ins, etc. In general, shot boundaries can be detected by comparing the visual video content between adjacent frames. As with segments, shots can be defined by start and stop times as well as by start and stop frames. In any such embodiments, the shot boundary detector 613 can output the shot boundary data that defines the shot boundaries.

The context generator 610 can combine the metadata, the segment data, and/or the shot boundary data to generate the frame context 615. Turning back now to FIG. 6A, the context generator 610 can feed the frame context 615 to the text area detector and extractor 620. In embodiments, the text area detector and extractor 620 receives at least one frame of the video data from the video source 220 and outputs the recognized textual data. The details of the functionality of the text area detector and extractor 624 described in detail in reference to FIG. 7B.

As shown in FIG. 7B, the text area detector and extractor 620 may include several sub modules. In the particular example shown, the text area detector and extractor 620 includes a frame buffer 621, a text area detector 622, a text area buffer 623, and a text area and text pixel refinement module 624. In general, the text area detector and extractor 620 analyzes frames within the video data and outputs portions of the frames that include or are likely to include on-screen text. The text area detector and extractor 620 outputs the visual content from the regions and a description of the location of the region within the frame.

In one embodiment, the frame buffer 621 receives the video data from the video source 220 and temporarily stores it while the text area detector 622 analyzes the video data on a frame-by-frame basis to determine regions within the frames the potentially include text. For each frame, the text area detector 622 outputs portions of the visual video content within each region. The text area buffer 623 temporarily stores the output visual video content within each region while the text area and text pixel refinement module 624 analyzes and refines each region based on the frame context data 615 received from the context generator 610.

As described above, the text area detector and extractor 630 can receive frame context data 615 from the context generator 610. The frame context data 615 may inform the processes of the text area detector and extractor 620 to aid in the determination and refinement of regions containing text within a particular frame. In one embodiment the text area detector and extractor 620 can be configured with specific regions of the frame that are more likely or less likely to contain text given specific metadata, segment data, and shot data included in the frame context data 615. For example, if the program metadata and the segment data indicates that a particular frame depicts a non-advertisement segment of a live sporting events, the text area detector and extractor 620 may determine that a specific location of the frame is likely to display on-screen scoreboard (e.g., in the middle of the top edge of the frame).

In another embodiment, the text area detector and extractor 620 may include adaptive functionality, such that its behavior may change during continued operation. For example, the text area detector and extractor 620 adaptively learn that there is always a timestamp in the visual video content in a particular corner of the frames for video data received from a particular television network.

In one embodiment, the text area detector and extractor 620, and in particular the text area and text pixel refinement module 624, can receive an estimate of successful recognition from the character recognizer 630. This estimate can include a score describing how likely it is that the recognized text is accurate. Accordingly, the estimate can measure the likelihood that the previously output region actually contained recognizable text. The text area detector and extractor 620 can store this estimate along with frame context data 615 and region data associated with the previous frame to modify the operation of the text area detector and extractor 620. For example, if the text area detector and extractor 620 receives a very low estimate or score for a region from the previous frame, then future analysis of a similarly defined region with the same frame context data 615 and other associated metadata may cause the text area detector and extractor 620 to be less likely to determine that the region may contain text.

In one embodiment, the character recognizer 630 can perform one or more character recognition operations to analyze the text and region data 625 to generate textual data. To increase the accuracy of the character recognition operations, character recognizer 630 can reference a standard dictionary 633. The standard dictionary 633 can include a listing of expected words and/or phrases against which the recognized textual data can be compared to determine if the recognized textual data is reasonable or valid. The character recognizer 630 may then output the textual data and the region data 635 with which it is associated. The textual data and region data 635 for all the regions in a particular frame can then be output as text detection output 645.

Figure 6B depicts another particular example system 602 for generating textual data based on contextual information about the individual frames in the video data received from the video source 220. In system 602, the context generator 610 and the text area detector extractor 620 function as described in reference to system 601 in FIG. 6A. However, system 602 includes enhanced character recognizer 660 that can reference both the standard dictionary 633 and a custom dictionary 637 to enhance its character recognition functionality.

As shown, the enhanced character recognizer 660 includes a dictionary manager 661 and an OCR module 663. The dictionary manager 661 can receive the frame context data 615 from the context generator 610. Based on the frame context data 615, the dictionary manager 661 can select one or more custom or context-specific dictionaries 637 that further focus or narrow the list of expected or valid textual data defined in the standard dictionary 633. For example, if the frame context data 615 indicates that the text and region data 625 is part of a television program about race car driving, then the dictionary manager 661 can select a custom dictionary 637 that includes vocabulary and phrases specific to the sport of race car driving.

The OCR module 663 can then analyze the textual data in the text and region data 625 in view of the custom dictionary 637 to generate refined textual data and region data 638 for a particular region in a particular frame. The refined textual data and region data 638 for all the regions in a particular frame can then be combined into a refined text detection data output 639 to be used by one or more other components for generating corresponding GUI element definitions.

In some embodiments, the dictionary manager 661 can submit new words or phrases that do not appear in the standard dictionary 633 or one or more of the custom dictionaries 637. In such embodiments, the dictionary manager 661 can update the listing of valid words or phrases that are not already present in the custom dictionaries 637 to expand the list of expected or valid words therein.

Figure 6C depicts another particular example system 603 for generating textual data based on context information about the individual frames in the video data received from the video source 220. In such embodiments, system 603 can include a context-based enhanced character recognizer 660 to provide feedback in the form of an estimate of successful recognition 640 to the text detector and extractor 620. The estimate of successful recognition 640 can be used by the text detector and extractor 620 to determine if the detected regions of the visual video content that potentially contain text actually contain text.

In system 603, the text and region data 625 is initially analyzed by a character recognizer 630, as described in reference to FIG. 6A. The analysis of the character recognizer 630 is informed by a standard dictionary 633. Accordingly, the character recognizer 633 generates textual data and region data 635. The enhanced character recognizer 660 can then analyze the textual data in view of one or more custom dictionaries 637 based on the frame context data 615. In some embodiments, the analysis of the textual data in view of the custom dictionary 637 can include determining what fraction of the words in the textual data appears in the custom dictionary 637. The fraction can then be used to generate an estimate 640 of how successful the character recognition operations were. The estimate 640 can then be fed back to the text detector extractor 620 to improve its performance for detecting regions in a frame associated with a particular context that may contain text.

In one embodiment, the dictionary manager 661 can access a custom dictionary 637 based on the description of the context in which the text is detected included in the frame context data 615. The dictionary manager 661 may also receive new words from enhanced character recognizer 660. In such embodiments, the dictionary manager 661 can access one or more standard dictionaries 633 and one or more custom dictionaries 637. As described herein, each dictionary includes a set of words or phrases that are likely to appear as on-screen text in a particular frame based on a particular context.

The dictionary manager 661 can receive frame context data 615 for the current frame being analyzed. The dictionary manager 661 may also receive the region data for the detected text within a frame from the text detector and extractor 620. Using the region data, the dictionary manager 661 can construct a subset of the available dictionaries (e.g., custom dictionaries 637 and the standard dictionaries 633) as a contextual dictionary. A subset may include some or all of the available dictionaries and may include portions of one or more of the standard dictionaries 633 and custom dictionaries 637. The dictionary manager 661 can construct a contextual dictionary based on configuration information. For example, the dictionary manager 661 may access a dictionary of professional athlete names and may include this dictionary is part of the contextual dictionary when the frame context data indicates that the frame is part of a video asset relating to a sporting event or other sports programming.

In one embodiment, dictionary manager 661 may receive a set of new words from the enhanced character recognizer 660. The dictionary manager 661 may collect and cache the set of words. Some or all of the new words may be added to one or more of the dictionaries. The dictionary manager 661 may select the dictionary to which the new words should be added based on the frame context data 615. The analysis that the dictionary manager 661 may perform to evaluate whether a new words should be added to one or more dictionaries may include counting the frequency with which a particular word is detected in frames associated with a particular set of frame context data 615. For example, if a new athlete name is being detected very frequently when the frame context data 615 indicates that the frame is part of a video asset related to a basketball game, then the dictionary manager 661 may determine that the athletes name should be added to a custom dictionary 637 associated with basketball player names.

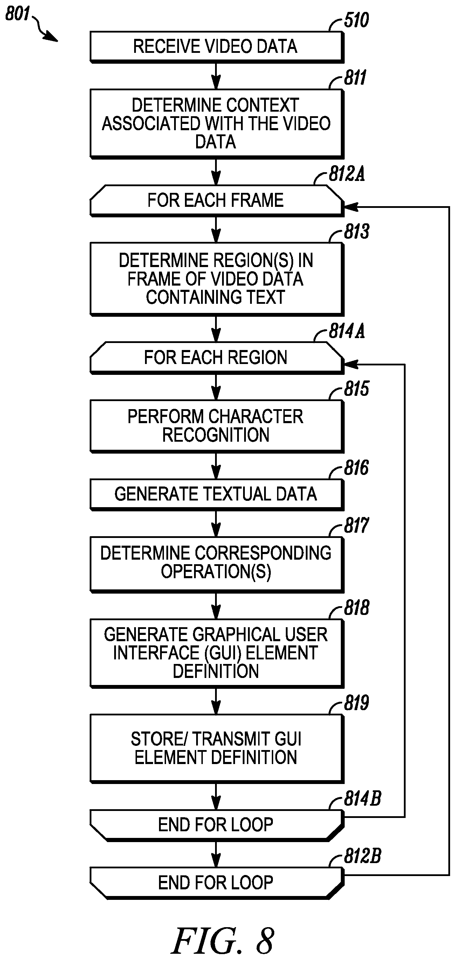

FIG. 8 is a flowchart of a context-based method 801 for generating textual data corresponding to text included in the visual video content of a particular video asset according to one embodiment. Method 801 can begin at block 810 in which the server receives video data. As described herein the video data can include visual data, audio data, embedded textual data, or some combination thereof. In some embodiments, the video data can include one or more video assets. The video assets can each be or include one or more segments. Furthermore, the video assets and/or the segments can include multiple shot boundaries that define transitions between scenes and/or camera angles.

At block 811, the server can determine context data associated with the video data. Determining the context data can include access a data store to retrieve context data associated with video data or one of its components. In such embodiments, the context data can be associated with an identifier that is associated with the video data. The context data can include descriptions of the video assets, the segments, and/or the shot boundaries. In particular, the context data can include indications that associate each frame in the video data with the particular video asset, segment, or shot. In some embodiments, the context data can further indicate where in video asset, segment, or shot a particular frame is located relative to other frames in the video data. Indication of the frame location in the video data can be defined by the time indicator for a frame number.

Furthermore, the context data can include descriptions of the frames and/or the video asset, segment, or shot with which it is associated. For example, the context data can include a title, genre, summary, production date, broadcast date, licensing information, rating, and other similar information.

At block 812A, the server can enter a loop to perform a number of operations for each frame in the video data. In one embodiment, at block 813, the server can determine one or more regions in the frame that may contain text. As described herein, determining regions in the frame that might contain text may include defining regions around the areas in which text is detected in the visual video content. For example, the regions may be defined by region data that includes initial coordinates within the frame and corresponding areas originating from or encompassing those initial coordinates.

At block 814A, the server can enter a loop to perform a number of operations for each region in a particular frame. In one embodiment, the server can perform character recognition on the portion of the visual video content within the region. In some embodiments, performing character recognition on the portion of the visual video content can include extracting the portion of the visual video content within the region, and processing the portion of the visual video content to increase the fidelity, resolution, signal-to-noise ratio, or contrast between the pixels that form the text and the background pixels. Such processing can increase the accuracy of the character recognition operation, such as an OCR operation.

At block 816, the server can generate textual data corresponding to the text in the particular region being analyzed. Generating textual data can include referencing the context data associated with the video data to which the frame and region belong. For example, the particular region of a particular frame may be associated with context data that indicates that that region is displaying scrolling headline news at the bottom of the screen of a news broadcast. Using such information, the server can determine standard and custom dictionaries with which to limit or cross reference against the recognized text. In reference to the example of the headline news scrolling the bottom of the screen, portions of the standard dictionary and combinations of one or more custom dictionaries can be selected to improve the accuracy of the character recognition of the scrolling text in that particular region.

In addition, information regarding the rate at which text scrolls across the region can also be used by the server to determine the position of text within the region and adjacent frames of the visual video content. Such information can be used to leverage the temporal redundancy of the text contained in such a region. For instance, if, for some reason, the contrast between the text pixels and the background pixels is insufficient to accurately recognize a particular letter or word in frame, the server can reference one or more adjacent frames in the order of the sequence to look for higher-quality images of the text. Higher-quality images of text can then be used to generate the corresponding textual data.

At block 817, the server can generate one or more corresponding operations based on the generated textual data, the region data, and/or frame context data. Again, in reference to the scrolling headlines in the bottom portion of a screen during a news broadcast example, the operations may be defined for providing interactivity based on the news broadcast context and the particular textual data corresponding to the text imaged in the scrolling headlines. For example, as news about a particular stock price scrolls across the screen, it may be desirable to execute an application that collects detailed press releases about the company associated with that particular stock. Accordingly, the operation can include supplying the textual data associated with the scrolling text (i.e., the stock name) to a stock reporting application or web browser as input. The application can be executed by the server or another computing device (e.g. the client computing device).

At block 818, the server can generate a GUI element definition. The GUI element definition can include specifications for a particular GUI element (e.g., a button, hyperlink, control, etc.), the textual data, the predetermined operation, the region data, and/or any of the data contained in the frame context data. In addition, the GUI element definition can be associated with a particular frame or set of frames, a particular segment, for a particular video asset in the video data. Accordingly, the GUI element definition can be used to generate a corresponding GUI element when the visual video content of the associated frames, segments, or video assets are displayed to a user. In one embodiment, the GUI element can be superimposed on top of the corresponding visual video content.

At block 819, the server can transmit and/or store the GUI element definition such that it is accessible to one or more client computing devices when the corresponding portion of the video data is displayed. In one embodiment, the combination of multiple GUI element definitions can be combined into a single GUI definition. The GUI definition can be associated with the video data, or some portion thereof, such that it can be used or referenced while a client computing device is displaying the corresponding video content to generate a corresponding user interface that provides a user with additional functionality to interact with the client computing device based on text included in the visual video content, and the corresponding textual data.

At block 814B, the server can repeat blocks 815 through 819 for each region in a particular frame. Similarly, at block 812B, the server can repeat block 813 and the loop between blocks 814A and 814B for at least some of the frames in the video data. Once the regions containing texts and the frames that are to be analyzed are processed, the server can exit the nested for loops at blocks 814 B and 812B.

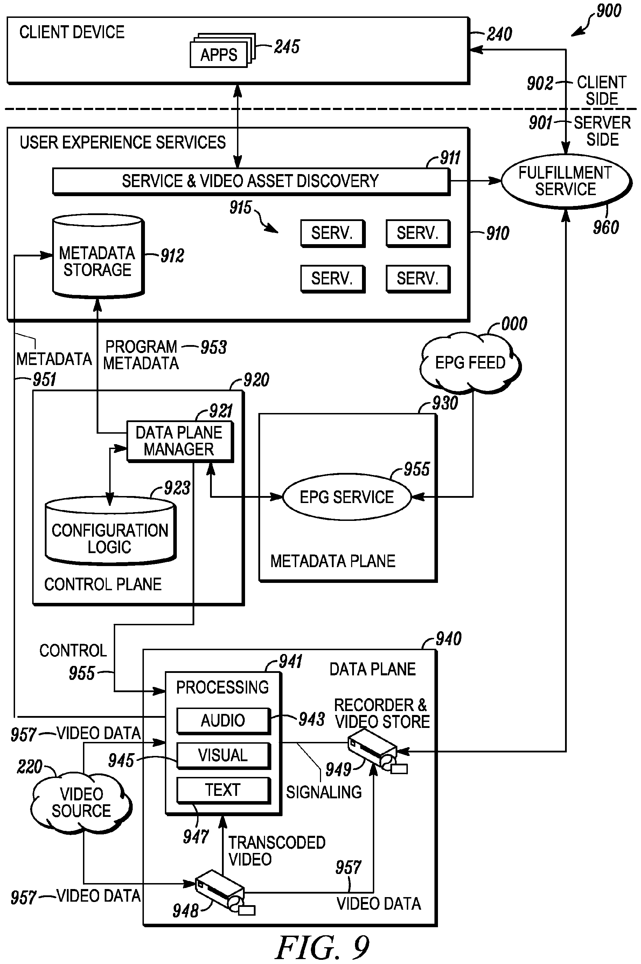

The functionality of various embodiments of the present disclosure can be implemented as combinations of hardware, firmware, and/or software. Additionally, certain advantages can be realized when the functionality described herein is split among one or more processors in one or more servers. For example, embodiments of the present disclosure can be implemented in a client-server configuration in which some of functionality described herein is implemented in a server computer while other functionality is implemented in one or more client computing devices in communication with the server computer. FIG. 9 illustrates one example system 900 the can be used to implement the functionality of the present disclosure in a client-server configuration.

As shown, system 900 is divided into a client side 902 and a server side 901. On the client side 902, the system 900 can include one or more client devices 240 that can execute one or more applications 245. Applications 245 can include functionality for generating interactive GUIs superimposed over corresponding video content. Applications 245 can also include functionality for performing various operations in response to user input received through the interactive GUIs. Any of such operations can use textual data corresponding to text contained in the video content as input. Accordingly, applications 245 can be implemented or configured to provide functionality including, but not limited to, content segmentation, nonlinear navigation, text search, advertisements boundaries detection, providing interactive text, identifying program highlights, providing parallel feeds, longshot detection, logo detection, speaker excitements detection, live visualization, optical character recognition, and gender detection.

On the server side 901, the system 900 can include various components for analyzing, storing, transmitting, and describing attributes of various video data received from the video source 220. In one embodiment, the server side 901 can include a data plane 941, a control plane 920, a metadata plane 930, and user experience services 910. Each of the components of the server side 901 can communicate with one or more other components as shown. In some embodiments, the various components of system 900 can be implemented in one or more of the services 215 of the server or applications 245 in client computing device 240.

The data plane 940 can include a processing module 941, a live transcoder 948, and a recorder and video store 949. In one embodiment, the processing module 941 can include sub modules for analyzing or processing the components of the video data 957 received from the video source 220. In the particular example shown processing module 941 can include an audio processing sub module 943 for analyzing or processing the audio data components of the video data 957. Processing module 941 can also include a visual processing sub module 945 for analyzing or processing the visual data component of video data 957. In some embodiments, the processing module 941 can also include a text processing module 947 for analyzing or processing the textual data included in the video data 957.

In embodiments, the processing module 941 can perform the various functions of the video services modules 210 and 410 described herein in reference to FIGS. 2, 4A and 4B. Accordingly, in some embodiments, the visual processing sub module 945 can perform various functions of the context generator 610 and the text area detector and extractor 620 described in reference to FIGS. 6A, 6B, 6C, 7A, and 7B.

As illustrated, the processing unit 947 can receive the video data 957 directly from the video source 220 or through the live transcoder 948. In embodiments in which the processing unit 941 receives the video data 957 through the live transcoder 948, the received video data can be in a transcoded video format different from the format of the original video data 957.

In embodiments, the processing module 941 can also receive programming information in the form of control data 955 that indicates the beginning and end of individual video assets, segments, or shots contained in the video data 957. The processing module 941 can then output signaling data. The signaling data can be stored along with video data 957 in its original format or in a transcoded format in the recorder and video store 949. The signaling data can include indications of various events within the video data. For example, the signaling data can include indications regarding the location and size of text in the visual data. Similarly, the signaling data can include indications regarding the location of specific sounds in the video data 957. Any of the resulting analysis generated by the processing module 941 can be associated with a unique identifier for later reference. The resulting analysis can be stored as metadata 951 in the metadata storage 912 or a signaling data in the recorder and video store 949.

Any of the processing of video data 957 performed by the processing module 941 can happen in real time. Alternatively, video data 957 can be buffered or stored and processed by the processing module 941 at a later time.

In some embodiments, the server side 901 can include a metadata plane 930. In such embodiments the metadata plane 931 can include an electronic program guide (EPG) service 933 for receiving EPG data from one or more EPG feeds 935. EPG data can include various forms of metadata that describe characteristics of the video data 957 received from the video source 220. In such embodiments, the EPG feed can be associated with or coordinate with the video source 220. For example, the EPG data handled by the metadata plane 930 can include the start and stop times, description, ratings, and the like for various video assets in the video 957. Such video assets can include television shows, commercials, movies, sporting events, etc.

In some embodiments, the EPG service 933 can periodically query the EPG feed 935 or other source of video asset related information to produce events to notify the control plane 920 of incoming video assets in the video data 957 from the video source 922. Alternatively, the EPG service 933 can passively receive updates from the EPG feed 935 whenever such new information is pushed.

Control plane 920 can include functionality for receiving and storing configuration data regarding the recording and analysis of the video data 957. For example, the control plane 920 can include a data plane manager 921 that can receive configuration parameters corresponding to user or system preferences that define the type of analysis and processing the processing module 941 performs. The configuration parameters can be stored in the configuration logic data store 923.

The data plane manager 921 can also manage various queues of video asset recording commands. For example, the data plane manager 921 can manage the scheduling, prioritization, distribution, cancellation, etc. of the video recording capabilities in the data plane 940. For example, the data plane manager 921 can transmit control signals 955 to the data plane 940 that instructed it to store various video assets in the recorder and video store 949 for later access.

In one embodiment, the data plane manager 921 can receive/retrieve and translate the EPG data processed by the EPG service 933 to provide control signals 955 the processing module 941 can use to demarcate specific video assets, segments, and shots contained in the video data 957. The control plane 920 can also be configured to store video asset identifiers and additional EPG data (i.e. metadata) or other video content related information in the metadata storage 912 in the user experience services 910.

In some embodiments, the server side 901 can also include the user experience services 910. User experience services 910 can include functionality for storing metadata resulting from the analysis of the audio content, the visual content, and the embedded text content and the additional metadata of various video assets identified by a unique identifier in the metadata storage 912. For example, the additional metadata can include EPG data or other video content related information.

User experience services 910 can provide the metadata stored in the metadata storage 912 to various services 915 or applications 245 in the client device 240 through the service and video asset directory 911. As shown, the user experience services 910 can host the services 915 that can perform specific types of analysis and operations on each video asset's audio, visual, and textual components either at the time of capture or at a later specified time. User experience services 910 can then provide the results of the feature analysis or operations performed by the services 915 to other services 915 or applications 245 in the client side 920.

User experience services 910 can also host a service and video asset directory 911 that acts as intermediary between the client side 902 and the server side 901 capable of returning a list of video assets and one or more sets of corresponding metadata. For example, one of the applications 245 executed on the client device 240 can request textual data for a particular frame, shot, segment, or video asset based on a unique identifier. The service and video asset directory 911 can access the analysis results of one or more services 915 to retrieve the textual data associated with the relevant unique identifier. Alternatively, the service and video asset directory 911, can handle a query from one or more applications 245 for metadata and/or unique identifiers associated with video assets that include specific audio, visual, or textual components. For example, applications 245 can request all video segments that include text in the visual content component that indicate the mention the name of a particular political figure. In response, the service and video asset directory 911 can access the metadata storage 912 to retrieve any and all unique identifiers for video assets and/or the specific locations within those video assets that include textual data comprising the name of that specific political figure. In some embodiments, the service of video asset directory 911 can also retrieve the corresponding video assets through the fulfillment service 960 from the recorder and video store 949 in the data plane 940.

As shown the fulfillment service 960 can handle the distribution of video data stored in the recorder and video store 949 among the various components of the system 900. In some embodiments, the fulfillment service 960 can handle both live and video on-demand delivery of video data 957.

The applications 245 and the client device 240 can include functionality for providing various features and functionality described herein. In additional embodiments, the applications 245 can include functionality for processing queries. Such queries can include the textual data determined from the analysis of one or more frames of the video data 957, as described herein. For example, applications 245 can process the query for text indicating words or sentences present in the audio or textual components of the video data 957. The applications 245 can also include queries for text indicating words or sentences present in the visual component of the video data 957. Such queries can also include audio searches. Audio searches can include queries of the audio component the video data 957 for the sound of the voice of a particular speaker, a particular ambience sound (e.g., explosions, sneezes, laughter, etc.), a particular song, and the like. Such audio queries can be input through a microphone or an audio file coupled to the client device 240. The applications 245 can also include functionality for initiating visual queries. Visual queries can search the visual component of the video data 957 for the face of a particular person, the image of a particular object or scene, and the like. Visual queries can be input through the applications 245 using data entered through a camera or using video or image files.

In addition to the visual and audio queries, the applications 245 can include functionality for selecting textual data resulting from the optical character recognition of text shown in the visual or textual components of the video data 957.

In some embodiments, the applications 245 can also include functionality for storing the queries. The stored queries can then be used to improve or otherwise modify the indexing of the video data 957 and the metadata stored 912.

In embodiments, the applications 245 can also include functionality for collecting information regarding the video assets watched by a particular user. Applications 245 can allow a user to playback or otherwise interact with selected video assets from specific index points corresponding to the results of one or more queries. Such functionality allows more flexible nonlinear viewing capabilities. One or more the applications 245 may present various combinations of the video content of a particular video data 957 along with metadata and other detected features in an integrated format. For example, and application 245 can define an order for presentation of the video content based on the audio, visual or textual features extracted from the video content, and/or information collected regarding previously viewed video assets.

One illustrative embodiment further allows data plane 940, control plane 920, metadata plane 930, and user experience services 910 to be locally hosted for each deployment, or allows any deployment configuration capable of hosting the aforementioned planes as shared services to serve multiple clients concurrently. In such embodiments, the systems, methods, apparatuses, and architectures in accordance with some of the foregoing illustrative examples are able to provide a media analysis framework suitable for practicing aspects of the present disclosure described herein.

Particular embodiments may be implemented in a non-transitory computer-readable storage medium for use by or in connection with the instruction execution system, apparatus, system, or machine. The computer-readable storage medium contains instructions for controlling a computer system to perform a method described by particular embodiments. The instructions, when executed by one or more computer processors, may be operable to perform that which is described in particular embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

## Claims

1. A method for generating a graphical user interface element, comprising:
receiving, by a computer system, video data comprising a plurality of frames arranged in an order;
providing, in a frame buffer of the computer system, temporary storage of the video data; and
for a frame in the plurality of frames temporarily stored in the frame buffer:
identifying, by the computer system, based on an analysis of the video data in the frame buffer, a location within the frame corresponding to a region containing text, wherein identifying the location comprises identifying the location based upon stored data from a character recognition operation previously performed on a region of a previous frame in the frame buffer, and wherein the stored data comprises a score that is associated with a likelihood of the region of the previous frame containing recognizable text, and wherein the computer system identifies the location within the frame corresponding to a region containing text based upon an identified association between frame context data and frame metadata of the video data in the frame buffer and frame context data and frame metadata that is associated with the score;
performing, by the computer system, a character recognition operation on the region to generate recognized characters, wherein performing the character recognition operation on the region comprises performing the character recognition operation on corresponding regions containing the text in one or more other frames in the plurality of frames;
generating, by the computer system, textual data based on the recognized characters;
generating, by the computer system, a graphical user interface element definition comprising a boundary box corresponding to the region based on the textual data; and
generating, by the computer system, a graphical user interface element based on the graphical user interface element definition, wherein the graphical user interface element is superimposed over the boundary box for the frame and for one or more other frames in the plurality of frames, and the graphical user interface element comprises a textual representation of at least a portion of the textual data based on the recognized characters.

2. The method of claim 1 further comprising accessing, by the computer system, a dictionary comprising expected textual data, and wherein generating the textual data comprises comparing the recognized characters with the expected textual data.

3. The method of claim 1 further comprising transmitting the video data and the graphical user interface element definition from the computer system to a remote client computing device for display on the client computing device.

4. The method of claim 1 further comprising storing, by the computer system, the video data and the graphical user interface element definition in one or more data stores accessible to a plurality of client computing devices.

5. The method of claim 1 further comprising associating, by the computer system, the graphical user interface element definition with the frame and one or more other frames in the plurality of frames contiguous with the frame according to the order.

6. The method of claim 1 further comprising:
generating, by the computer system, a graphical user interface element based on the graphical user interface element definition; and
associating, by the computer system, an operation to be performed in response to a user input received through the user interface element.

7. The method of claim 6 wherein the user interface element comprises a visual representation of at least a portion of the region or the text.

8. The method of claim 6 further comprising generating, by the computer system, a graphical user interface comprising the graphical user interface element, wherein the graphical user interface is superimposed on the frame and one or more other frames in the plurality of frames.

9. The method of claim 6 further comprising executing, by the computer system, the operation, wherein the operation uses the textual data as input.

10. The method of claim 9, wherein the operation comprises generating a request for data comprising the textual data, the method further comprising:
sending the request for data from the computer system to an external data source;
receiving, in response to the request for data, additional data related to the textual data; and
generating, by the computer system, another graphical user interface comprising information based on the additional data.

11. The method of claim 1 further comprising determining, by the computer system, metadata associated with the video data and comprising information about the content of the video data, and wherein generating the textual data is further based on the metadata.

12. The method of claim 11 wherein determining the metadata comprises receiving electronic program guide data comprising descriptions of content of the video data.

13. The method of claim 11 wherein determining the metadata comprises analyzing the video data to detect one or more segments of the video data.

14. The method of claim 13 wherein the segments of the video data are defined by continuity of audio data.

15. The method of claim 13 wherein the segments of the video data are defined by continuity of visual data.

16. The method of claim 11 wherein determining the metadata comprises receiving a custom dictionary of expected textual data associated with the metadata or a user, and wherein generating the textual data comprises comparing the recognized characters with the custom dictionary.

17. The method of claim 11 wherein the metadata further comprises predetermined coordinates for the region in the frame and an area, and wherein determining the region is based on the metadata.

18. The method of claim 1, further comprising:
for the frame in the plurality of frames:
determining, by the computer system, contextual data associated with the video data; and wherein the
determining, by the computer system, location within the frame corresponding to the region containing text, comprises determining, by the computer system, location within the frame corresponding to the region containing text based on the contextual data.

19. The method of claim 1, wherein identifying the location further comprises identifying the location based upon stored data from a character recognition operation previously performed on a region of a previous frame in the frame buffer.

20. The method of claim 19, wherein the stored data comprises one or more of an estimate of successful recognition and a score describing a likelihood of accurate text recognition.

21. A computing system for generating a graphical user interface element, comprising:
one or more processors; and
a memory comprising instructions that, when executed by the processors, configure the one or more processors to be configured to:
receive video data comprising a plurality of frames arranged in an order;
temporarily store the video data in a frame buffer of the computing system; and
for a frame in the plurality of frames temporarily stored in the frame buffer:
identify, based on an analysis of the video data in the frame buffer, a location within the frame corresponding to a region containing text, wherein identifying the location comprises identifying the location based upon stored data from a character recognition operation previously performed on a region of a previous frame in the frame buffer, and wherein the stored data comprises a score that is associated with a likelihood of the region of the previous frame containing recognizable text, and wherein the location within the frame corresponding to a region containing text is identified based upon an identified association between frame context data and frame metadata of the video data in the frame buffer and frame context data and metadata that is associated with the score;
perform a character recognition operation on the region to generate recognized characters, wherein performing the character recognition operation on the region comprises performing the character recognition operation on corresponding regions containing the text in one or more other frames in the plurality of frames;
generate textual data based on the recognized characters; and
generate a graphical user interface element definition comprising a boundary box corresponding to the region based on the textual data; and
generate a graphical user interface element based on the graphical user interface element definition, wherein the graphical user interface element is superimposed over the boundary box for the frame and for one or more other frames in the plurality of frames, and the graphical user interface element comprises a textual representation of at least a portion of the textual data based on the recognized characters.

## Patentansprüche

1. Verfahren zum Erzeugen eines grafischen Benutzeroberflächenelements, Folgendes umfassend:
Empfangen, durch ein Computersystem, von Videodaten, die mehrere Einzelbilder umfassen, die in einer Reihenfolge angeordnet sind;
Bereitstellen einer zeitweiligen Speicherung der Videodaten in einem Einzelbildpuffer des Computersystems; und
für ein Einzelbild in den mehreren Einzelbildern, die vorübergehend in dem Einzelbildpuffer gespeichert sind:
Identifizieren, durch das Computersystem auf der Grundlage einer Analyse der Videodaten in dem Einzelbildpuffer, einer Stelle innerhalb des Einzelbilds, die einem Bereich entspricht, der Text enthält, wobei das Identifizieren der Stelle das Identifizieren der Stelle auf der Grundlage gespeicherter Daten aus einer zuvor an einem Bereich eines vorhergehenden Einzelbilds in dem Einzelbildpuffer ausgeführten Zeichenerkennungsoperation umfasst, und wobei die gespeicherten Daten eine Bewertung umfassen, die mit einer Wahrscheinlichkeit verknüpft ist, dass der Bereich des vorhergehenden Einzelbilds erkennbaren Text enthält, und wobei das Computersystem die Stelle innerhalb des Einzelbilds, die einem Bereich entspricht, der Text enthält, auf der Grundlage einer identifizierten Verknüpfung zwischen Einzelbildkontextdaten und Einzelbildmetadaten der Videodaten in dem Einzelbildpuffer und Einzelbildkontextdaten und Einzelbildmetadaten, die mit der Bewertung verknüpft sind, identifiziert;
Durchführen durch das Computersystem einer Zeichenerkennungsoperation an dem Bereich, um erkannte Zeichen zu erzeugen, wobei das Durchführen der Zeichenerkennungsoperation an dem Bereich das Durchführen der Zeichenerkennungsoperation an entsprechenden Bereichen, die den Text enthalten, in einem oder mehreren anderen Einzelbildern der mehreren Einzelbilder umfasst;
Erzeugen, durch das Computersystem, von Textdaten auf der Grundlage der erkannten Zeichen;
Erzeugen, durch das Computersystem, einer grafischen Benutzeroberflächenelementdefinition, die eine dem Bereich entsprechende Begrenzungsbox umfasst, auf Grundlage der Textdaten; und
Erzeugen, durch das Computersystem, eines grafischen Benutzeroberflächenelements
auf der Grundlage der Definition des grafischen Benutzeroberflächenelements, wobei das grafische Benutzeroberflächenelement über der Begrenzungsbox für das Einzelbild und für ein oder mehrere andere Einzelbilder in den mehreren Einzelbildern überlagert ist und das grafische Benutzeroberflächenelement auf der Grundlage der erkannten Zeichen eine Textdarstellung von wenigstens einem Abschnitt der Textdaten umfasst.

2. Verfahren nach Anspruch 1, ferner umfassend das Zugreifen durch das Computersystem auf ein Wörterbuch mit erwarteten Textdaten , und wobei das Erzeugen der Textdaten das Vergleichen der erkannten Zeichen mit den erwarteten Textdaten umfasst.

3. Verfahren nach Anspruch 1, ferner umfassend das Übertragen der Videodaten und der grafischen Benutzeroberflächenelementdefinition von dem Computersystem zu einer entfernten Client-Rechenvorrichtung zum Anzeigen auf der Client-Rechenvorrichtung.

4. Verfahren nach Anspruch 1, ferner umfassend das Speichern durch das Computersystem der Videodaten und der grafischen Benutzeroberflächenelementdefinition in einem oder mehreren Datenspeichern, auf die mehrere Client-Rechenvorrichtungen zugreifen können.

5. Verfahren nach Anspruch 1, ferner umfassend das Verknüpfen durch das Computersystem der grafischen Benutzeroberflächenelementdefinition mit dem Einzelbild und einem oder mehreren anderen Einzelbildern in den mehreren Einzelbildern, die an das Einzelbild angrenzen, gemäß der Reihenfolge.

6. Verfahren nach Anspruch 1, ferner Folgendes umfassend:
Erzeugen, durch das Computersystem, eines grafischen Benutzeroberflächenelements auf der Grundlage der Definition des grafischen Benutzeroberflächenelements; und
Verknüpfen, durch das Computersystem, einer durchzuführenden Operation als Reaktion auf eine durch das Benutzeroberflächenelement empfangenen Benutzereingabe.

7. Verfahren nach Anspruch 6, wobei das Benutzeroberflächenelement eine visuelle Darstellung wenigstens eines Abschnitts des Bereichs oder des Texts umfasst.

8. Verfahren nach Anspruch 6, ferner umfassend das Erzeugen, durch das Computersystem, einer grafischen Benutzeroberfläche, die das grafische Benutzeroberflächenelement umfasst, wobei die grafische Benutzeroberfläche über das Einzelbild und ein oder mehrere andere Einzelbilder in den mehreren Einzelbildern überlagert ist.

9. Verfahren nach Anspruch 6, ferner umfassend das Ausführen durch das Computersystem der Operation, wobei die Operation die Textdaten als Eingabe verwendet.

10. Verfahren nach Anspruch 9, wobei die Operation das Erzeugen einer Anfrage nach Daten umfasst, die die Textdaten umfassen, wobei das Verfahren ferner Folgendes umfasst:
Senden der Datenanforderung von dem Computersystem an eine externe Datenquelle;
Empfangen zusätzlicher Daten in Bezug auf die Textdaten als Reaktion auf die Datenanforderung; und
Erzeugen, durch das Computersystem, einer weiteren grafischen Benutzeroberfläche, die Informationen auf der Grundlage der zusätzlichen Daten umfasst.

11. Verfahren nach Anspruch 1, ferner umfassend das Bestimmen, durch das Computersystem, von Metadaten, die mit den Videodaten verknüpft sind und Informationen zum Inhalt der Videodaten umfassen, und wobei das Erzeugen der Textdaten ferner auf den Metadaten basiert.

12. Verfahren nach Anspruch 11, wobei das Bestimmen der Metadaten das Empfangen elektronischer Programmführungsdaten umfasst, die Beschreibungen des Inhalts der Videodaten umfassen.

13. Verfahren nach Anspruch 11, wobei das Bestimmen der Metadaten das Analysieren der Videodaten umfasst, um ein oder mehrere Segmente der Videodaten zu erfassen.

14. Verfahren nach Anspruch 13, wobei die Segmente der Videodaten durch die Kontinuität von Audiodaten definiert werden.

15. Verfahren nach Anspruch 13, wobei die Segmente der Videodaten durch die Kontinuität von visuellen Daten definiert werden.

16. Verfahren nach Anspruch 11, wobei das Bestimmen der Metadaten das Empfangen eines Benutzerwörterbuchs von erwarteten Textdaten umfasst, die mit den Metadaten oder einem Benutzer verknüpft sind, und wobei das Erzeugen der Textdaten das Vergleichen der erkannten Zeichen mit dem Benutzerwörterbuch umfasst.

17. Verfahren nach Anspruch 11, wobei die Metadaten ferner vorgegebene Koordinaten für den Bereich in dem Einzelbild und eine Fläche umfassen, und wobei das Bestimmen des Bereichs auf den Metadaten basiert.

18. Verfahren nach Anspruch 1, ferner Folgendes umfassend:
für das Einzelbild in den mehreren Einzelbildern:
Bestimmen, durch das Computersystem, von Kontextdaten, die mit den Videodaten verknüpft sind; und wobei das
Bestimmen, durch das Computersystem, der Stelle innerhalb des Einzelbilds, die dem Bereich entspricht, der Text umfasst, das Bestimmen, durch das Computersystem, der Stelle innerhalb des Einzelbilds, die dem Bereich entspricht, der Text enthält, auf der Grundlage der Kontextdaten umfasst.

19. Verfahren nach Anspruch 1, wobei das Identifizieren der Stelle ferner das Identifizieren der Stelle auf der Grundlage von gespeicherten Daten aus einer Zeichenerkennungsoperation umfasst, die zuvor an einem Bereich eines vorherigen Einzelbilds in dem Einzelbildpuffer durchgeführt worden ist.

20. Verfahren nach Anspruch 19, wobei die gespeicherten Daten eine Schätzung der erfolgreichen Erkennung und/oder eine Bewertung, die eine Wahrscheinlichkeit einer genauen Texterkennung beschreibt, umfassen.

21. Rechensystem zum Erzeugen eines grafischen Benutzeroberflächenelements, Folgendes umfassend:
einen oder mehrere Prozessoren; und
einen Speicher, der Anweisungen umfasst, die, wenn von den Prozessoren ausgeführt, den einen oder die mehreren zu konfigurierenden Prozessoren zu Folgendem konfigurieren:
Empfangen von Videodaten, die mehrere in einer Reihenfolge angeordnete Einzelbilder umfassen; vorübergehendes Speichern der Videodaten in einem Einzelbildpuffer des Rechensystems; und, für ein Einzelbild in den mehreren Einzelbildern, die vorübergehend in dem Einzelbilderpuffer gespeichert sind:
Identifizieren auf der Grundlage einer Analyse der Videodaten in dem Einzelbildpuffer, einer Stelle innerhalb des Einzelbilds, die einem Bereich entspricht, der Text enthält, wobei das Identifizieren der Stelle das Identifizieren der Stelle auf der Grundlage gespeicherter Daten aus einer zuvor an einem Bereich eines vorhergehenden Einzelbilds in dem Einzelbildpuffer ausgeführten Zeichenerkennungsoperation umfasst, und wobei die gespeicherten Daten eine Bewertung umfassen, die mit einer Wahrscheinlichkeit verknüpft ist, dass der Bereich des vorhergehenden Einzelbilds erkennbaren Text enthält, und wobei die Stelle innerhalb des Einzelbilds, die einem Bereich entspricht, der Text enthält, auf der Grundlage einer identifizierten Verknüpfung zwischen Einzelbildkontextdaten und Einzelbildmetadaten der Videodaten in dem Einzelbildpuffer und Einzelbildkontextdaten und -metadaten, die mit der Bewertung verknüpft sind, identifiziert wird;
Durchführen einer Zeichenerkennungsoperation an dem Bereich, um erkannte Zeichen zu erzeugen, wobei das Durchführen der Zeichenerkennungsoperation an dem Bereich das Durchführen der Zeichenerkennungsoperation an entsprechenden Bereichen, die den Text enthalten, in einem oder mehreren anderen Einzelbildern der mehreren Einzelbilder umfasst;
Erzeugen von Textdaten auf der Grundlage der erkannten Zeichen; und
Erzeugen einer grafischen Benutzeroberflächenelementdefinition, Folgendes umfassend: einer
dem Bereich entsprechende Begrenzungsbox, auf Grundlage der Textdaten; und
Erzeugen eines grafischen Benutzeroberflächenelements auf der Grundlage der Definition des grafischen Benutzeroberflächenelements, wobei das grafische Benutzeroberflächenelement über der Begrenzungsbox für das Einzelbild und für ein oder mehrere andere Einzelbilder in den mehreren Einzelbildern überlagert ist und das grafische Benutzeroberflächenelement auf der Grundlage der erkannten Zeichen eine Textdarstellung von wenigstens einem Abschnitt der Textdaten umfasst.

## Revendications

1. Procédé pour générer un élément d'interface utilisateur graphique, comprenant :
la réception, par un système informatique, de données vidéo comprenant une pluralité d'images agencées dans un ordre ;
la fourniture, dans un tampon d'image du système informatique, du stockage temporaire des données vidéo ; et
pour une image dans la pluralité d'images stockée temporairement dans le tampon d'image :
l'identification, par le système informatique, sur la base d'une analyse des données vidéo dans le tampon d'image, d'un emplacement dans l'image correspondant à une région contenant du texte, l'identification de l'emplacement comprenant l'identification de l'emplacement sur la base de données stockées provenant d'une opération de reconnaissance de caractères précédemment réalisée sur une région d'une image précédente dans le tampon d'image, et les données stockées comprenant un score associé à une probabilité que la région de l'image précédente contienne du texte reconnaissable, et le système informatique identifiant l'emplacement dans l'image correspondant à une région contenant du texte sur la base d'une association identifiée entre des données de contexte d'image et des métadonnées d'image des données vidéo dans le tampon d'image et des données de contexte d'image et des métadonnées d'image associées au score ;
la réalisation, par le système informatique, d'une opération de reconnaissance de caractères sur la région pour générer des caractères reconnus, la réalisation de l'opération de reconnaissance de caractères sur la région comprenant la réalisation de l'opération de reconnaissance de caractères sur des régions correspondantes contenant le texte dans une ou plusieurs autres images dans la pluralité d'images ;
la génération, par le système informatique, de données textuelles sur la base des caractères reconnus ;
la génération, par le système informatique, d'une définition d'élément d'interface utilisateur graphique comprenant un cadre d'objet correspondant à la région sur la base des données textuelles ; et
la génération, par le système informatique, d'un élément d'interface utilisateur graphique
sur la base de la définition de l'élément d'interface utilisateur graphique, l'élément d'interface utilisateur graphique étant superposé au cadre d'objet pour l'image et pour une ou plusieurs autres images dans la pluralité d'images, et l'élément d'interface utilisateur graphique comprenant une représentation textuelle d'au moins une partie des données textuelles sur la base des caractères reconnus.

2. Procédé selon la revendication 1, comprenant en outre l'accès par le système informatique à un dictionnaire comprenant des données textuelles attendues, et la génération des données textuelles comprenant la comparaison des caractères reconnus avec les données textuelles attendues.

3. Procédé selon la revendication 1, comprenant en outre la transmission des données vidéo et de la définition de l'élément d'interface utilisateur graphique du système informatique à un dispositif informatique client distant pour un affichage sur le dispositif informatique client.

4. Procédé selon la revendication 1, comprenant en outre le stockage, par le système informatique, des données vidéo et de la définition de l'élément d'interface utilisateur graphique dans un ou plusieurs magasins de données accessibles pour une pluralité de dispositifs informatiques clients.

5. Procédé selon la revendication 1, comprenant en outre l'association, par le système informatique, de la définition de l'élément d'interface utilisateur graphique à l'image et à une ou plusieurs autres images dans la pluralité d'images contiguës à l'image d'après l'ordre.

6. Procédé selon la revendication 1, comprenant en outre :
la génération, par le système informatique, d'un élément d'interface utilisateur graphique sur la base de la définition de l'élément d'interface utilisateur graphique ; et
l'association, par le système informatique, d'une opération à réaliser en réponse à une entrée utilisateur reçue par l'intermédiaire de l'élément d'interface utilisateur.

7. Procédé selon la revendication 6, dans lequel l'élément d'interface utilisateur comprend une représentation visuelle d'au moins une partie de la région ou du texte.

8. Procédé selon la revendication 6, comprenant en outre la génération, par le système informatique, d'une interface utilisateur graphique comprenant l'élément d'interface utilisateur graphique, l'interface utilisateur graphique étant superposée à l'image et à une ou plusieurs autres images dans la pluralité d'images.

9. Procédé selon la revendication 6, comprenant en outre l'exécution, par le système informatique, de l'opération, l'opération utilisant les données textuelles en tant qu'entrée.

10. Procédé selon la revendication 9, dans lequel l'opération comprend la génération d'une demande de données comprenant les données textuelles, le procédé comprenant en outre :
l'envoi de la demande de données du système informatique à une source de données externe ;
la réception, en réponse à la demande de données, de données supplémentaires liées aux données textuelles ; et
la génération, par le système informatique, d'une autre interface utilisateur graphique comprenant des informations sur la base des données supplémentaires.

11. Procédé selon la revendication 1, comprenant en outre la détermination, par le système informatique, de métadonnées associées aux données vidéo et comprenant des informations sur le contenu des données vidéo, et la génération des données textuelles étant en outre sur la base des métadonnées.

12. Procédé selon la revendication 11, dans lequel la détermination des métadonnées comprend la réception de données de guide de programme électronique comprenant des descriptions du contenu des données vidéo.

13. Procédé selon la revendication 11, dans lequel la détermination des métadonnées comprend l'analyse des données vidéo pour détecter un ou plusieurs segments des données vidéo.

14. Procédé selon la revendication 13, dans lequel les segments des données vidéo sont définis par la continuité de données audio.

15. Procédé selon la revendication 13, dans lequel les segments des données vidéo sont définis par la continuité de données visuelles.

16. Procédé selon la revendication 11, dans lequel la détermination des métadonnées comprend la réception d'un dictionnaire personnalisé des données textuelles attendues associées aux métadonnées ou à un utilisateur, et la génération des données textuelles comprenant la comparaison des caractères reconnus avec le dictionnaire personnalisé.

17. Procédé selon la revendication 11, dans lequel les métadonnées comprennent en outre des coordonnées prédéterminées pour la région dans l'image et une zone, et la détermination de la région étant basée sur les métadonnées.

18. Procédé selon la revendication 1, comprenant en outre :
pour l'image dans la pluralité d'images :
la détermination, par le système informatique, de données contextuelles associées aux données vidéo ; et
la détermination, par le système informatique, de l'emplacement dans l'image correspondant à la région contenant du texte, comprend la détermination, par le système informatique, de l'emplacement dans l'image correspondant à la région contenant du texte sur la base des données contextuelles.

19. Procédé selon la revendication 1, dans lequel l'identification de l'emplacement comprend en outre l'identification de l'emplacement sur la base de données stockées provenant d'une opération de reconnaissance de caractères réalisée précédemment sur une région d'une image précédente dans le tampon d'image.

20. Procédé selon la revendication 19, dans lequel les données stockées comprennent une estimation de la reconnaissance réussie et/ou un score décrivant une probabilité d'une reconnaissance de texte correcte.

21. Système informatique pour générer un élément d'interface utilisateur graphique, comprenant :
un ou plusieurs processeurs ; et
une mémoire comprenant des instructions qui, lorsqu'elles sont exécutées par les processeurs, configurent le ou les processeurs à configurer pour :
recevoir des données vidéo comprenant une pluralité d'images agencées dans un ordre ; stocker temporairement les données vidéo dans un tampon d'image du système informatique ; et pour une image dans la pluralité d'images stockée temporairement dans le tampon d'image :
identifier, sur la base d'une analyse des données vidéo dans le tampon d'image, un emplacement dans l'image correspondant à une région contenant du texte, l'identification de l'emplacement comprenant l'identification de l'emplacement sur la base de données stockées provenant d'une opération de reconnaissance de caractères réalisée précédemment sur une région d'une image précédente dans le tampon d'image, et les données stockées comprenant un score associé à une probabilité que la région de l'image précédente contienne un texte reconnaissable, et l'emplacement dans l'image correspondant à une région contenant du texte étant identifié sur la base d'une association identifiée entre des données de contexte d'image et des métadonnées d'image des données vidéo dans le tampon d'image et des données de contexte d'image et des métadonnées associées au score ;
réaliser une opération de reconnaissance de caractères sur la région pour générer des caractères reconnus, la réalisation de l'opération de reconnaissance de caractères sur la région comprenant la réalisation de l'opération de reconnaissance de caractères sur des régions correspondantes contenant le texte dans une ou plusieurs autres images dans la pluralité d'images ;
générer des données textuelles sur la base des caractères reconnus ; et
générer une définition de l'élément d'interface utilisateur graphique comprenant un cadre d'objet correspondant à la région sur la base des données textuelles ; et
générer un élément d'interface utilisateur graphique sur la base de la définition de l'élément d'interface utilisateur graphique, l'élément d'interface utilisateur graphique étant superposé au cadre d'image pour l'image et pour une ou plusieurs autres images dans la pluralité d'images, et l'élément d'interface utilisateur graphique comprenant une représentation textuelle d'au moins une partie des données textuelles sur la base des caractères reconnus.
